# EUROPEAN PATENT SPECIFICATION

(11) **EP 2 194 826 B1**
(45) Date of publication and mention of the grant of the patent: **24.10.2012**
(21) Application number: 08832953.7
(22) Date of filing: 26.09.2008
(51) Int. Cl.: C09K 5/16

(54) **SELF-HEATING APPARATUSES USING SOLID CHEMICAL REACTANTS**
SELBSTERWÄRMENDE GERÄTE MIT FESTEN CHEMISCHEN REAKTANTEN
APPAREILS AUTO-CHAUFFANTS UTILISANT DES RÉACTIFS CHIMIQUES SOLIDES

(30) Priority: 26.09.2007 US 862120
(43) Date of publication of application: 16.06.2010
(73) Proprietor: Heat Wave Technologies, LLC, Marina Del Rey, CA 90292 (US)
(72) Inventor: FARONE, William, Irvine CA 92606 (US); PALMER, Tracy, Temecula CA 92592 (US)
(74) Representative: Gervasi, Gemma
(86) International application number: PCT/US2008/078003
(87) International publication number: WO 2009/042955

(56) References cited:
- WO-A-01/04548
- JP-A- 3 004 819
- US-A- 5 993 854

## Description

### BACKGROUND OF THE INVENTION

In today's on-the-go consumer society, there is increasing demand for a convenient and effective container which may be used by consumers to heat consumable products, such as coffee, tea, milk, soup, and many other types of beverage or food products, at any time and any location, without having access to any conventional heating means, such as a coffee maker, microwave, cook top, etc. The self-heating technology based on an exothermic reaction between different reagents is often used in designing such containers. Under such self-heating technology, two or more reagents are initially separated by a breakable partition, and when the heat needs to be generated, the partition is broken to allow the mixing of the reagents, thereby creating an exothermic reaction for heat generation. Typically, the reagents employed for generating the heat include at least a solid material, such as calcium oxide, and a liquid material, such as water.

The current self-heating technology, however, has several shortcomings. First, the heat produced is often inadequate to heat the desired amount of beverage in a short period of time, Second, the amount of solid chemicals required to produce an adequate amount of heat may be too large to be conveniently incorporated into a conveniently sized container. Third, an adequate amount of heat may not be produced for a sufficient length of time to allow heat to transfer to the beverage and keep the beverage warm.
For example, the International Patent Publication Number WO 01/04548 A1 discloses self heating packages that function without external energy. The heat is generated by contact of a heat producing composition as calcium oxide and an activating solution as water. The activating solution is contained in a first compartement which is adjacent to a second compartement containing the heat producing composition. A frangible seal is formed between the compartements and may be ruptured to allow mixing of the solutions for generation of heat.

However, there is a need in the art for an improved self-heating apparatus. The present invention solves these and other needs in the art.

### BRIEF DESCRIPTION OF THE DRAWINGS

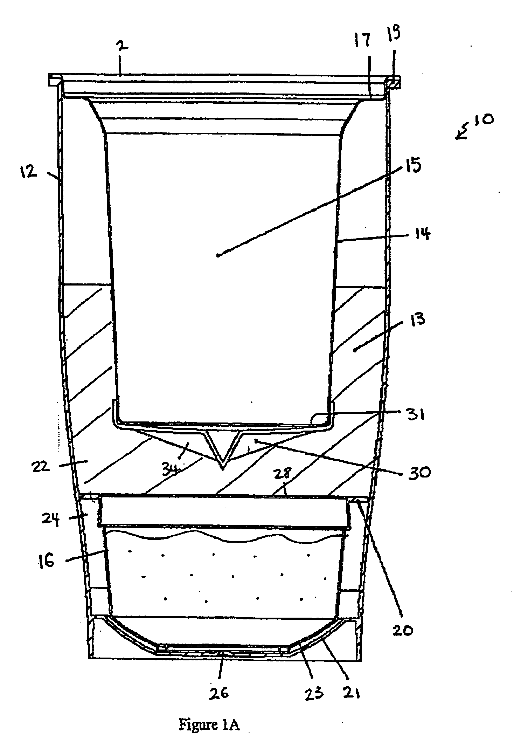

Figure 1A is a cross-sectional view of a container prior to activation of the self-heating step according to one embodiment of the present invention;

Figure IB shows a perspective view of the container of Figure 1A according to one embodiment of the present invention;

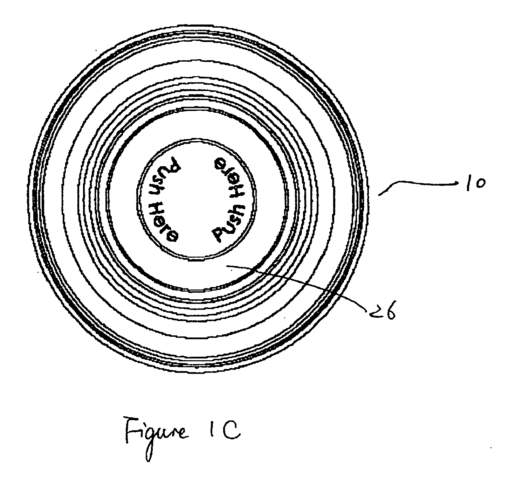

Figure 1C shows a bottom view of the container of Figure 1A according to one embodiment of the present invention;

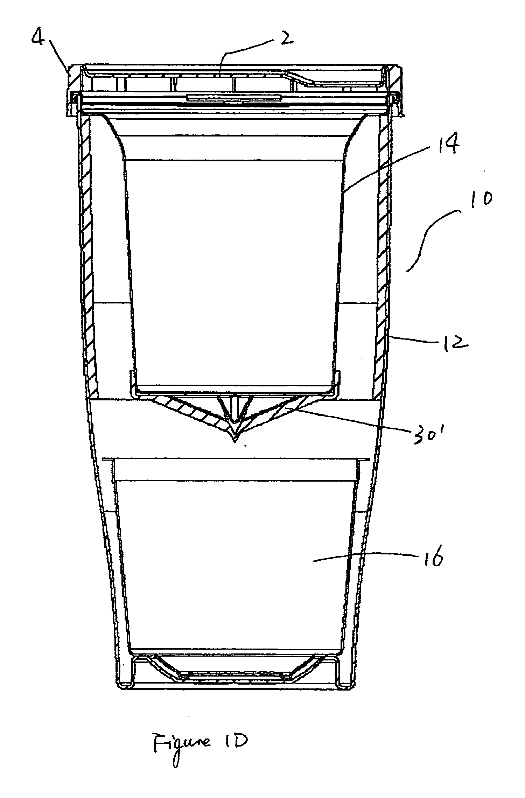

Figure 1D shows a cross-sectional view of a container according to another embodiment of the present invention;

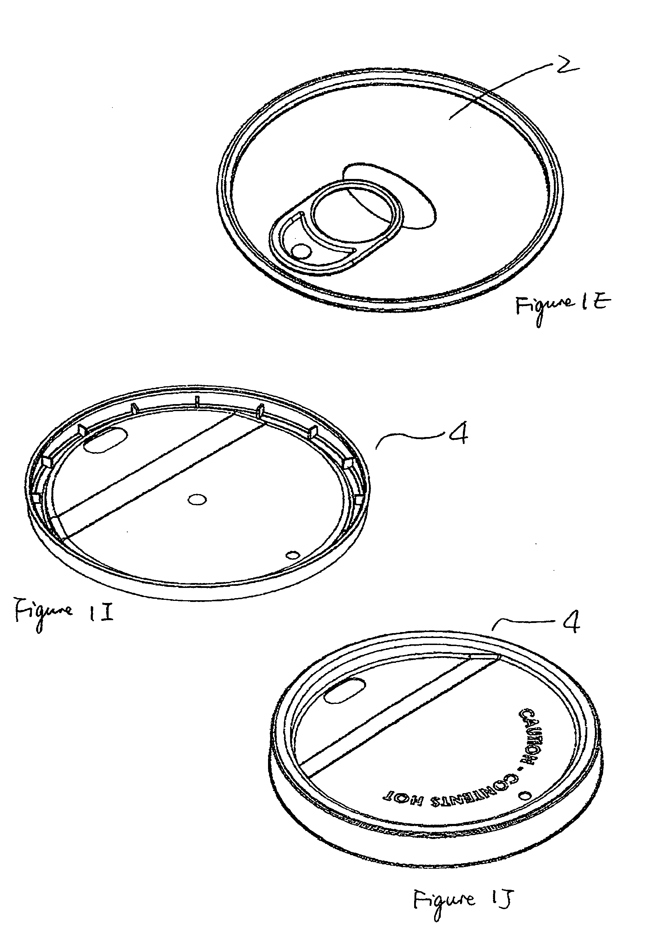

Figure 1E shows a top view of a pull tab lid according to one embodiment of the present invention;

Figure IF shows a cross-sectional view of a breaking device of the container of Figure 1A according to one embodiment of the present invention;

Figure 1G shows a top view of a breaking device of the container of Figure IA according to one embodiment of the present invention;

Figure 1H shows a bottom view of the breaking device of the container of Figure IA according to one embodiment of the present invention;

Figure 1I shows a bottom view of a drinking lid of the container of Figure 1A according to one embodiment of the present invention;

Figure 1J shows a top view of a drinking lid of the container of Figure 1A according to one embodiment of the present invention;

Figure 1K shows a top view of a breaking device according to one embodiment of the present invention;

Figure 1L shows a bottom view of the breaking device of Figure 1K according to one embodiment of the present invention;

Figure 1M shows a cross-sectional view of the breaking device of Figure 1K according to one embodiment of the present invention;

Figure IN shows a bottom view of a breaking device according to one embodiment of the present invention;

Figure 10 shows a bottom view of a breaking device according to one embodiment of the present invention;

Figure IP shows a bottom view of a breaking device according to one embodiment of the present invention;

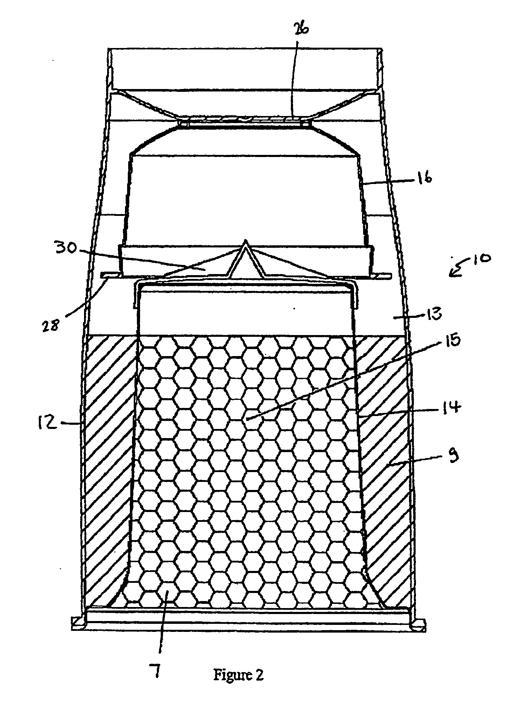

Figure 2 is an up-side-down cross-sectional view of the container of Figure IA prior to the self-heating step according to one embodiment of the present invention;

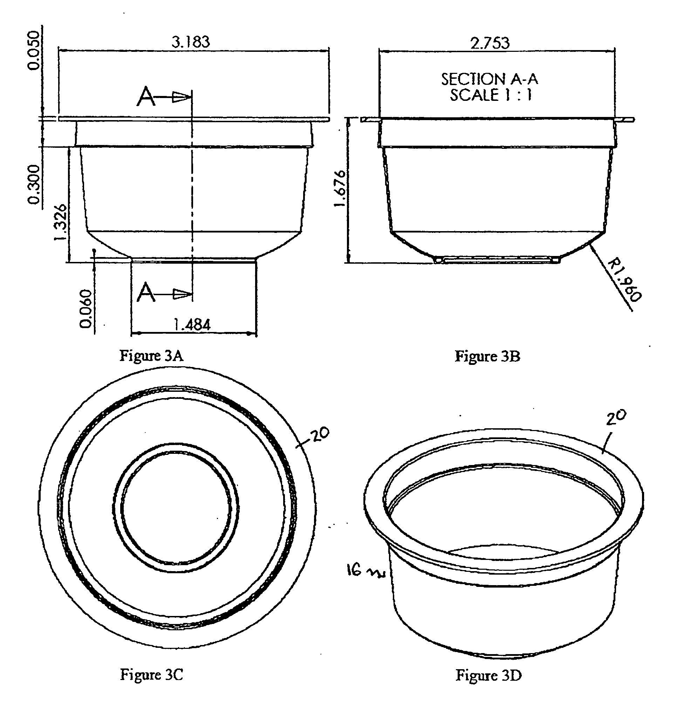

Figure 3A is a cross-sectional view of a first enclosed compartment according to one embodiment of the present invention;

Figure 3B is a cross-sectional view of a first enclosed compartment according to one embodiment of the present invention;

Figure 3C is a top view of the first enclosed compartment of Figure 3A according to one embodiment of the present invention;

Figure 3D is a perspective view of the first enclosed compartment of Figure 3A according to one embodiment of the present invention;

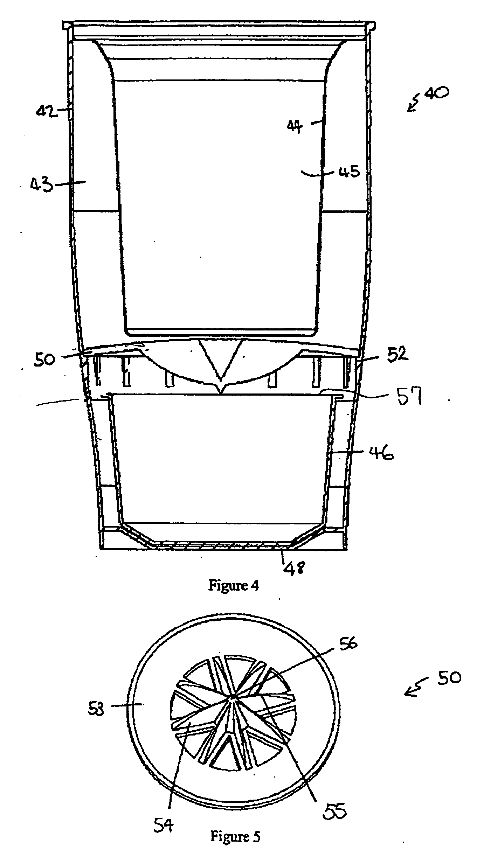

Figure 4 isa cross-sectional view of a container prior to activation of the self-heating step according to yet another embodiment of the present invention;

Figure 5 is a bottom view of the breaking device included in the container of Figure 4 according to one embodiment of the present invention;

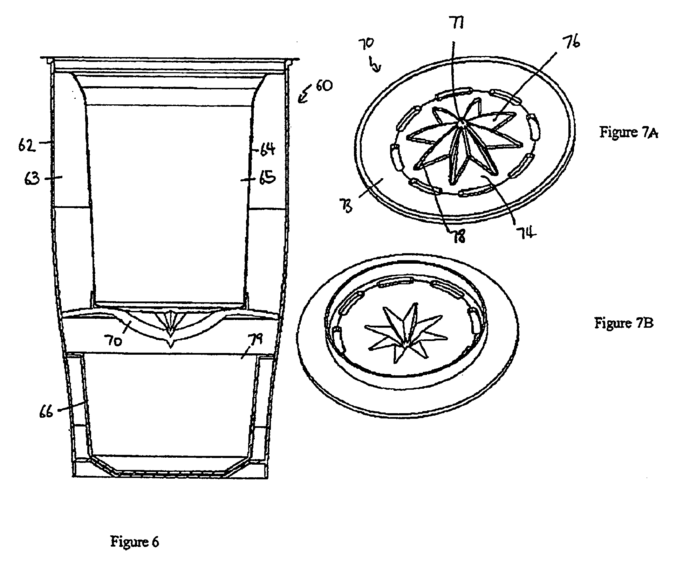

Figure 6 is a cross-sectional view of a container prior to activation of the self-heating step according to an alternative embodiment of the present invention;

Figure 7A is a bottom view of the breaking device included III the container of Figure 6 according to one embodiment of the present invention;

Figure 7B is a top view of the breaking device included in the container of Figure 6 according to one embodiment of the present invention;

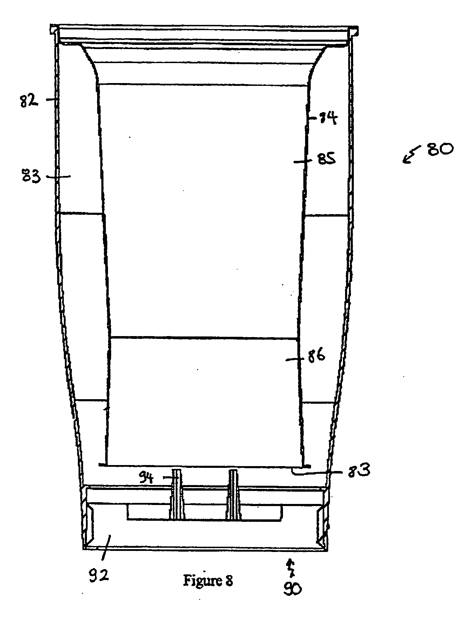

Figure 8 is a cross-sectional view of a container prior to activation of the self-heating step according to another embodiment of the present invention;

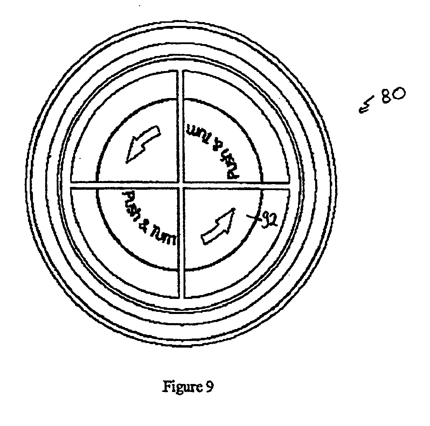

Figure 9 is a bottom view of the container of Figure 8 according to one embodiment of the present invention;

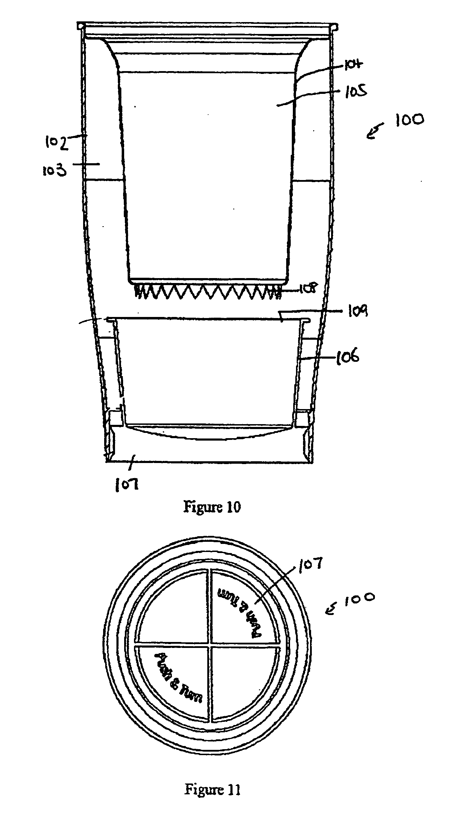

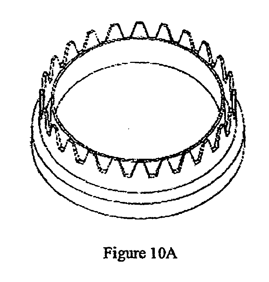

Figure 10 is a cross-sectional view of a container prior to activation of the self-heating step according to an additional embodiment of the present invention;

Figure 10A shows a bottom view of the breaking device of Figure. 10 according to one embodiment of the present invention;

Figure 11 is a bottom view of the container of Figure 10 according to one embodiment of the present invention;

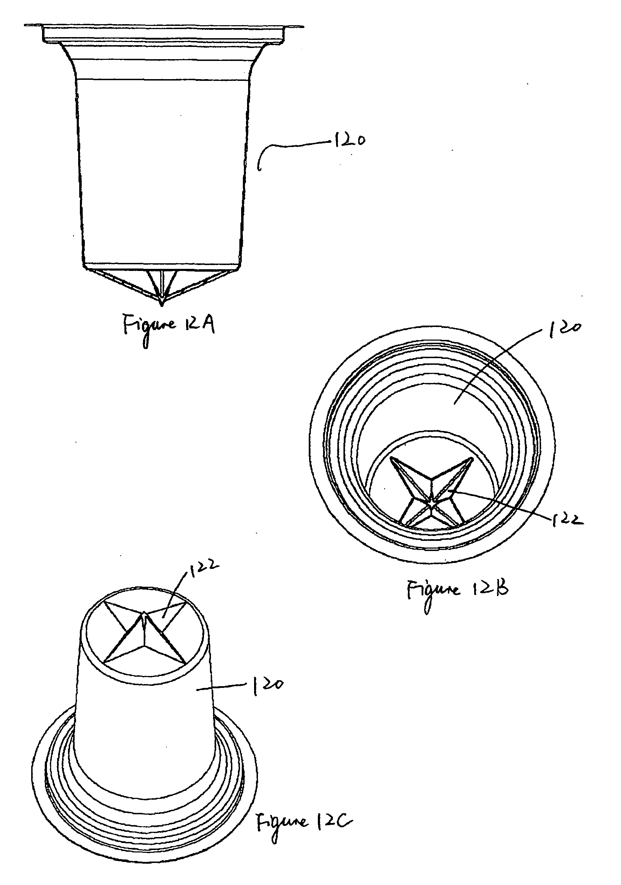

Figure 12A shows a cross-sectional VIew of the inner container body according to one embodiment of the present invention;

Figure 12B shows a top view of the inner container body of Figure 12A according to one embodiment of the present invention;

Figure 12C shows a bottom view of the inner container body of Figure 12A according to one embodiment of the present invention;

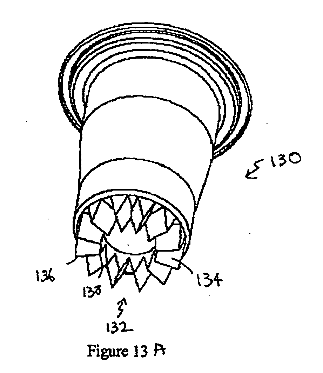

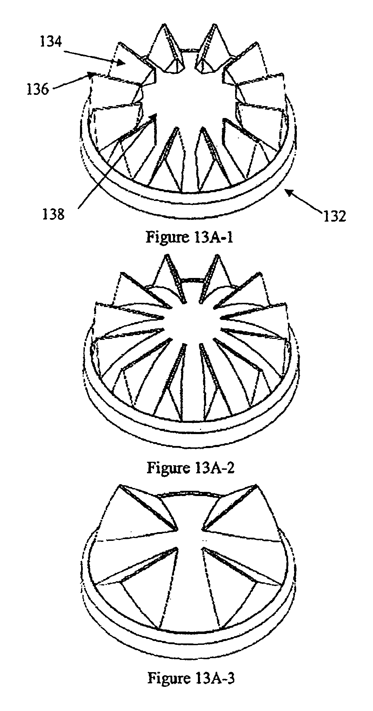

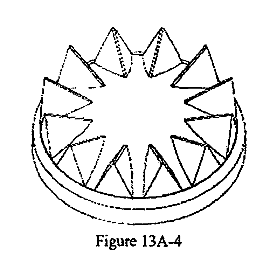

Figure 13A is a perspective view of an inner container body according to one embodiment of the present invention;

Figure 13A-1 is a bottom view of the breaking device according to one embodiment of the present invention;

Figure 13A-2 is a bottom view of the breaking device according to another embodiment of the present invention;

Figure 13A-3 is a bottom view of the breaking device according to yet another embodiment of the present invention;

Figure 13A-4 is a bottom view of the breaking device according to an alternative embodiment of the present invention;

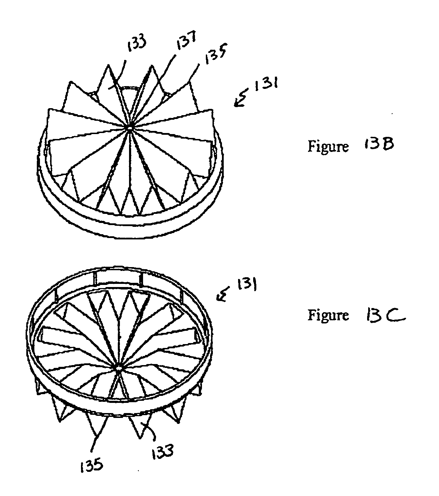

Figure 13B is a bottom, perspective view of the breaking device according to one embodiment of the present invention;

Figure 13C is a top, perspective view of the breaking device of Figure 13B according to one embodiment of the present invention;

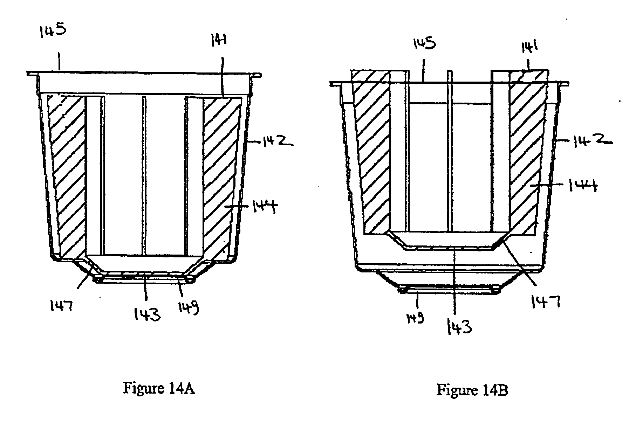

Figure 14A is a cross-sectional view of the first enclosed compartment containing a breaking device prior to activation of the self-heating step according to one embodiment of the present invention;

Figure 14B is a cross-sectional view of the first enclosed compartment of Figure 14A after activation according to one embodiment of the present invention;

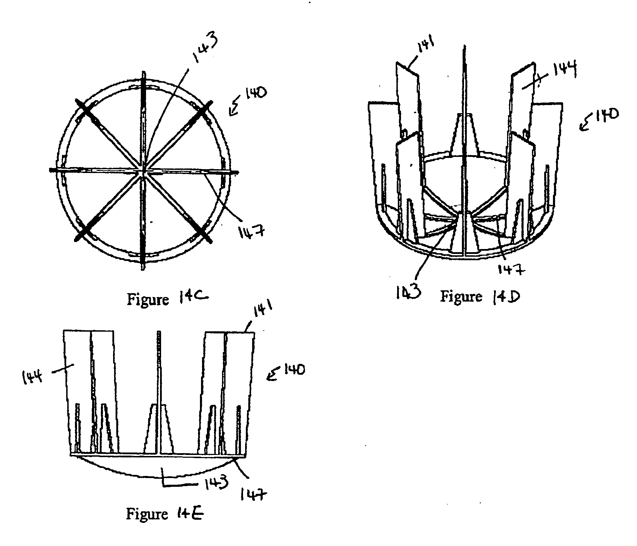

Figure 14C is a bottom view of the breaking device of Figure 14A according to one embodiment of the present invention;

Figure 14D is a perspective view of the breaking device of Figure 14A according to one embodiment of the present invention;

Figure 14E is a cross sectional view of the breaking device of Figure 14A according to one embodiment of the present invention;

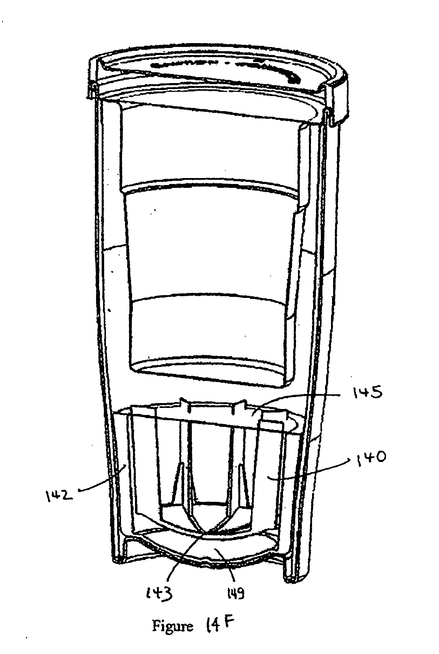

Figure 14F is a cut out perspective view of a self heating container which includes the first enclosed compartment and the breaking device of Figure 14A according to an embodiment of the present invention;

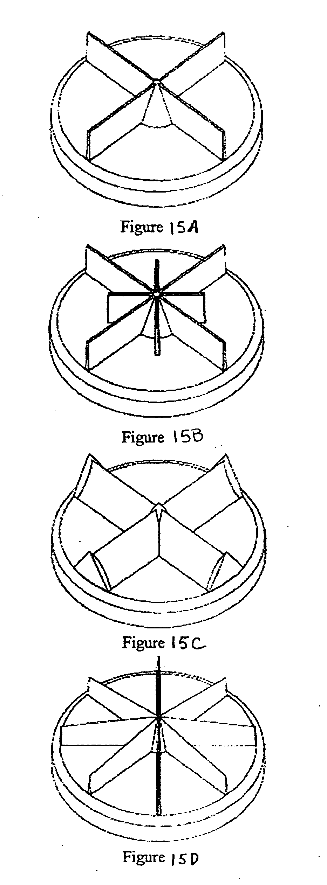

Figure 15A is a bottom view of the breaking device according to one embodiment of the present invention;

Figure 15B is a bottom view of the breaking device according to one embodiment of the present invention;

Figure *15C* is a bottom view of the breaking device according to one embodiment of the present invention;

Figure 15D is a bottom view of the breaking device according to one embodiment of the present invention;

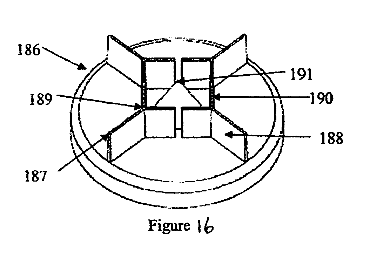

Figure 16 is a bottom view of the breaking device according to one embodiment of the present invention;

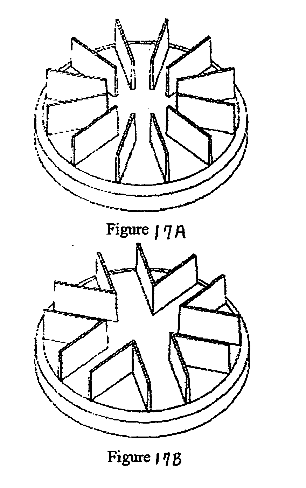

Figure 17A is a bottom view of the breaking device according to one embodiment of the present invention;

Figure 17B is a bottom view of the breaking device according to one embodiment of the present invention;

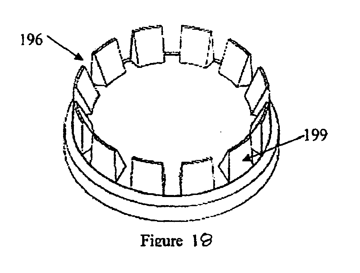

Figure 18 is a bottom view of the breaking device according to one embodiment of the present invention;

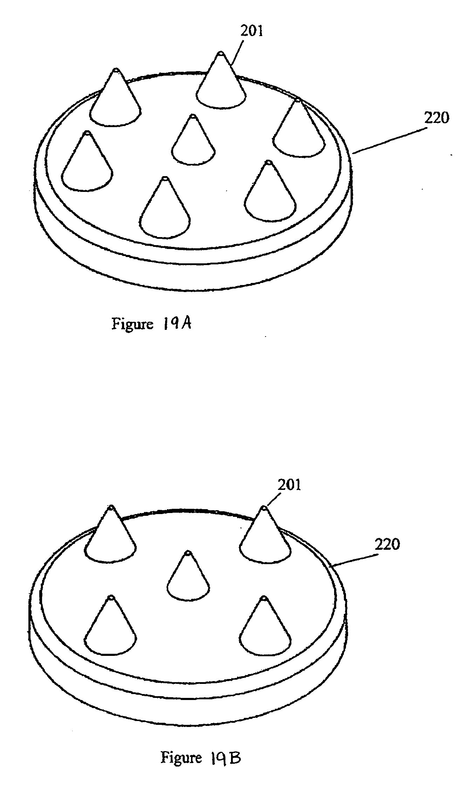

Figure 19A provides a bottom view of the breaking device according to one embodiment of the present invention;

Figure 19B provides a bottom view of the breaking device according to one embodiment of the present invention;

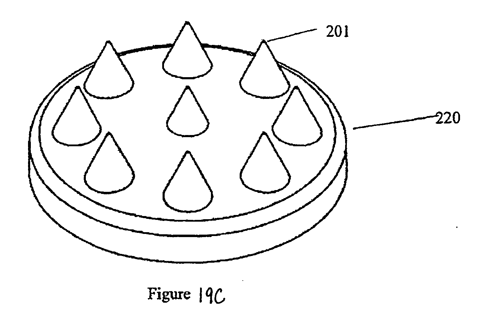

Figure *19C* provides a bottom view of the breaking device according to one embodiment of the present invention;

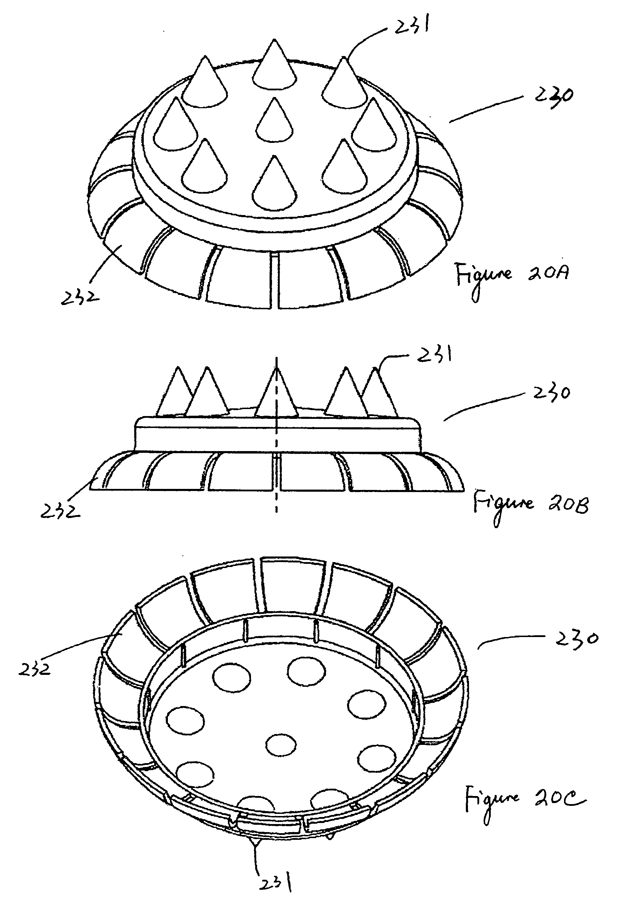

Figure 20A is a bottom view of the breaking device according to one embodiment of the present invention;

Figure 20B is a front view of the breaking device in an inverted position according to one embodiment of the present invention;

Figure 20C is a bottom view of the breaking device in an inverted position according to one embodiment of the present invention;

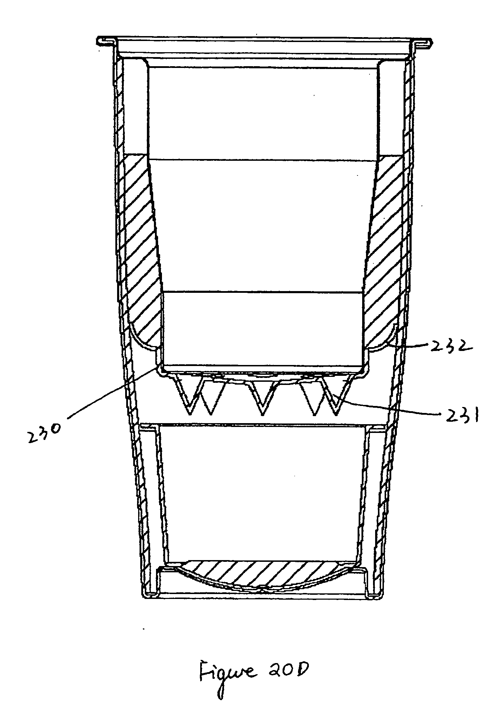

Figure 20D is a cross-sectional view of a self-heating container with the breaking device in Figures 20A-C according to one embodiment of the present invention; and

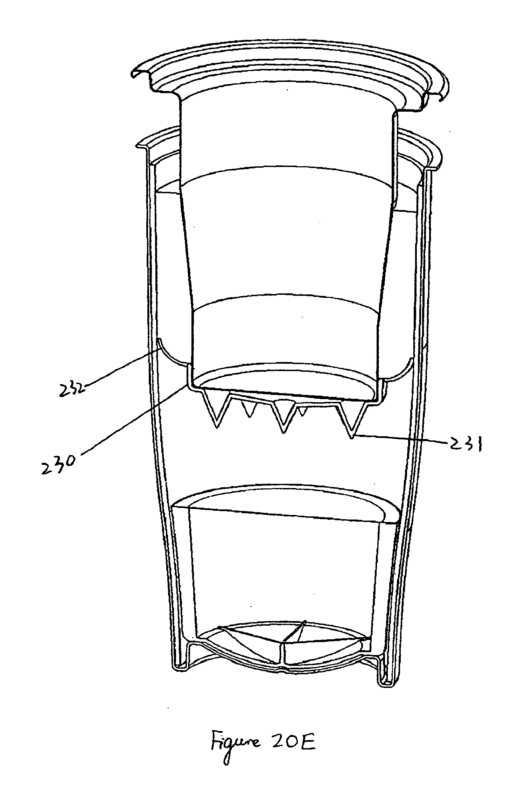

Figure 20E is a cut-out perspective view of the self-heating container in Figure 20D according to one embodiment of the present invention.

### BRIEF SUMMARY OF THE INVENTION

In one aspect, the present invention provides a self-heating apparatus having an aqueous solution and a solid chemical reactant mixture. Upon contacting the aqueous solution with the solid chemical reactant mixture, the aqueous solution dissolves said solid chemical reactant mixture thereby producing within two minutes a heating solution having a temperature of at least 200°F (366.48 K). The temperature of at least 200°F (366.48 K) is maintained for at least one minute.

In another aspect, the present invention provides a heating apparatus for heating a liquid comprising an aqueous solution and a solid chemical reactant mixture having a mass of less than 100 g. Upon contacting the aqueous solution with the solid chemical reactant mixture, the aqueous solution dissolves the solid chemical reactant mixture thereby producing a heating solution capable of heating at least six ounces (170.46 ml) of said liquid to at least 120°F (322.04 K).

In another aspect, the present invention provides a self-heating apparatus comprising an aqueous solution and a solid chemical reactant mixture. The solid chemical reactant mixture includes magnesium chloride, calcium chloride, and/or calcium oxide.

In another aspect, the present invention provides a solid chemical reactant mixture comprising an anhydrous magnesium chloride and/or dihydrate magnesium chloride, a calcium chloride, and a calcium oxide.

In another aspect, the present invention provides a method of heating a substance in a chamber. The method includes contacting an aqueous solution with a solid chemical reactant mixture to form a heating solution. The heating solution is in fluid contact with the chamber. The solid chemical reactant mixture includes a first chemical reactant, a second chemical reactant, and a third chemical reactant. The first chemical reactant is allowed to sufficiently exothermically react with the aqueous solution to heat the heating solution to within an elevated temperature range. The second chemical reactant is then allowed to sufficiently exothermically react with the aqueous solution to maintain the elevated temperature range. The third chemical reactant is then allowed to sufficiently exothermically react with the aqueous solution to maintain the temperature range thereby heating the substance.

In another aspect, the present invention provides a method of heating a substance in a chamber. The method includes contacting an aqueous solution with a solid chemical reactant mixture. The aqueous solution is allowed to dissolve the solid chemical reactant mixture thereby producing within two minutes a heating solution having a temperature of at least 200°F (366.48 K). The heating solution is in fluid contact with the chamber.
Finally, the heating solution is allowed to transfer heat to the chamber while maintaining a temperature of at least 200°F (366.48 K) for at least one minute within the heating solution thereby heating the substance. In some embodiments, the temperatures the heating solution in the dissolving step and the heat transfer step are independently from 200°F (366.48 K) to 250°F (394.26 K).

In another aspect, the present invention provides a method of heating at least six ounces of a liquid to a temperature of at least 120°F (322.04 K) in a chamber. The method includes contacting an aqueous solution with a solid chemical reactant mixture. The solid chemical reactant mixture has a mass of less than 100 g. The aqueous solution is allowed to dissolve the solid chemical reactant mixture thereby producing a heating solution. The heating solution is allowed to transfer heat to the chamber thereby heating the liquid to at least 120°F (322.04 K) in the chamber.

### DETAILED DESCRIPTION OF THE INVENTION

### I. Self-Heating Apparatuses

In one aspect, the present invention provides a self-heating apparatus comprising an aqueous solution and a solid chemical reactant mixture: In some embodiments,
the solid chemical reactant mixture includes magnesium chloride, calcium chloride, and/or calcium oxide. The proportions of magnesium chloride, calcium chloride, and/or calcium oxide may be from 10 to 55 parts, from 10 to 35 parts, and from 10 to 20 parts, respectively.

In some embodiments, the total combined mass of magnesium chloride, calcium chloride, and calcium oxide is less than 100 g. In other embodiments, the solid chemical reactant mixture consists of magnesium chloride, calcium chloride, calcium oxide, and an organic acid. In other embodiments, the solid chemical reactant mixture consists of magnesium chloride, calcium chloride, and calcium oxide (e.g. anhydrous calcium oxide). The magnesium chloride may be anhydrous magnesium chloride, dihydrate magnesium chloride, or a mixture thereof In some embodiments, the magnesium chloride is anhydrous magnesium chloride. The calcium chloride may be anhydrous calcium chloride, monohydrate calcium chloride, dihydrate calcium chloride, or a mixture thereof. In some embodiments, the calcium chloride is monohydrate calcium chloride, dihydrate calcium chloride, or a mixture thereof In other embodiments, the calcium chloride is dihydrate calcium chloride. Thus, in some embodiments, the calcium chloride is dihydrate calcium chloride and the magnesium chloride is anhydrous magnesium chloride. Where the calcium oxide, magnesium chloride or calcium chloride is specified as a particular hydration state (e.g. anhydrous, monohydrate, or dihydrate), one of skill will understand that trace amounts of other hydration states may be present as impurities. Similarly, the calcium oxide may contain trace amounts of calcium hydroxide as an impurity.

Upon contacting the aqueous solution with the solid chemical reactant mixture, the aqueous solution reacts with (e.g. dissolves) the solid chemical reactant mixture thereby producing heat. Where the aqueous solution dissolves the solid chemical reactant mixture, the heat produced is derived at least in part form the heat of solution of the solid chemical reactant mixture. The heat of solution occurs when an amount of chemical is dissolved in an aqueous solution (i.e. water or a solution containing water as the solvent) and diluted. The heat of solution is specific to the exact form of the chemical species. Certain embodiments of this and other aspects of the present invention are provided below. The embodiments described below are equally applicable to all aspects of the present invention.

In certain embodiments, upon contacting the aqueous solution with the solid chemical reactant mixture, the aqueous solution dissolves the solid chemical reactant mixture thereby producing, within five minutes, a heating solution having a temperature of at least 200°F (366.48 K). More preferably, the heating solution having a temperature of at least 200°F (366.48 K) is produce within four minutes, three minutes, two minutes, or one minute. The temperature may be at least 225°F (380.37 K) or approximately 250°F (394.26 K). The temperature may also be from 200°F (366.48 K) to 250°F (394.26 K). In some embodiments, sufficient heat is generated by dissolving the aqueous solution in the solid chemical reactant mixture to produce steam from the aqueous solution.

The temperature of the heating solution described in the preceding paragraph is typically maintained for at least one minute, or more preferably at least two minutes, three minutes, four minutes, five minutes, or ten minutes. The heating solution is the solution formed from the dissolution of the solid chemical reactant mixture (or portions thereof) by the aqueous solution.

In some embodiments, the self-heating apparatus is a self-heating container comprising a heating chamber for containing a substance to be heated. The container includes a reactant chamber adjacent to the heating chamber comprising a first enclosed compartment and a second enclosed compartment. The first enclosed compartment comprises a first reactant and the second enclosed container includes a second reactant. The first reactant and the second reactant are independently the solid chemical reactant mixture or the aqueous solution. Where the first reactant is the solid chemical reactant mixture, the second reactant is the aqueous solution. And where the first reactant is the aqueous solution, the second reactant is the solid chemical reactant mixture. The container further comprises a breakable partition between the first enclosed compartment and the second enclosed compartment. Upon breaking the breakable partition, the aqueous solution contacts the solid chemical reactant mixture.

The substance to be heated may be any appropriate substance, but are typically liquids and/or solids. In a preferred embodiment, the substance is a comestible substance (e.g. liquid and/or solid), such as a beverage (e.g. coffee, tea, water, or hot chocolate), a soup, or a solid food within a fluid to be cooked (e.g. noodles within water), etc.

The self-heating apparatus may include an insulating layer on the inner surface of the reactant chamber. In some embodiments, the insulating layer includes a textured surface.

In another embodiment, the heating apparatus is used for heating a liquid. The apparatus includes an aqueous solution and a solid chemical reactant mixture having a mass of less than 100 g. Upon contacting the aqueous solution with the solid chemical reactant mixture, the aqueous solution dissolves the solid chemical reactant mixture thereby producing a heating solution capable of heating at least six ounces of the liquid to at least 120°F (322.04 K). More preferably, the liquid is heated to at least 130°F, (327.59 K) 140°F (333.15 K), or 150°F (338.71 K). In some embodiments, the liquid is heated to at least 120°F (322.04 K) within two minutes of contacting the aqueous solution with the solid chemical reactant mixture. In other embodiments, upon breaking the breakable partition, the aqueous solution dissolves the solid chemical reactant mixture thereby producing a heating solution capable of heating at least six ounces of the liquid to a temperature from 130°F (327.59 K) to 150°F (338.71 K).

In some embodiments, the solid chemical reactant mixture may have a mass of less than 75 g. The aqueous solution may have a volume of less than 100 mL.

### A. Certain Container Embodiments

Certain embodiments of the self-heating apparatus will now be described more fully hereinafter with reference to the accompanying drawings of self-heating containers. The containers may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

Many modifications and other embodiments of the container will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

Referring to Figure 1A, in one embodiment, a container 10 includes an outer container body 12 defining a reactant chamber 13, an inner container body 14 defining a heating chamber 15 disposed within the outer container body 12, and a first enclosed compartment 16 and a second enclosed compartment 22 disposed within the reactant chamber 13. A breakable partition 28 is between the first enclosed compartment 16 and the second enclosed compartment 22. The inner container body 14 holds the beverage, food item, or any other consumable products or substance to be heated. A lid 2 covering the inner container body 14 is used to keep the substance inside the heating chamber 15. In a preferred embodiment, the inner container body 14 is constructed with a material having high thermal conductivity, For example, the inner container body 14 can be constructed of a metallic material such as aluminum or certain polymeric material such as polyolefin. In a preferred embodiment, the heating chamber 15 defined within the inner container body 14 is of such a size as to hold a liquid capacity of greater than 100 mL and in a more preferred embodiment, liquid capacity of greater than 200 mL. The inner container body 14 and the outer container body 12 may be formed as a single integrated structure in which the lip 17 of the inner container body 14 and the lip 19 of the outer container body 12 are continuous. Alternatively, the lip 17 of the inner container body 14 may be sealed with the lip 19 of the outer container body 12, using, for example, conventional sealing technologies such as thermal welding or crimping. In a preferred embodiment, the outer container body 12 is constructed with an insulating material to direct the heat toward the inner container body 14 and to keep the outside surface of the outer container body 12 from getting too hot for the user to hold. For example, the outer container body 12 can be made of an appropriate polyolefin. In one embodiment, the outer container body 12 includes a protruding, flexible bottom 26, which, in a relaxed state, protrudes downward. When a user exerts an upward force on the bottom 26, it can be pushed inward and directed to the inner container body 14. In one embodiment, the bottom 26 is integrally formed with the outer container body 12, using a molding process well-known in the art, such as injection molding or extrusion molding. Alternately, the bottom 26 can be sealed to the inside surface of the outer container body 12 using any welding process.

As shown in Figure IA, the first enclosed compartment 16 is disposed inside the outer container body 12, underneath the inner container body 14 in a spaced relationship. The outer surface 23 in the lower end of the first enclosed compartment 16 is secured to the inner surface 21 of the bottom 26. The first enclosed compartment 16 may be press fitted into the outer container body 12. Alternatively, the first enclosed compartment 16 may be attached to the bottom 26 using any sealing technology, including using an adhesive. The first enclosed compartment 16 is designed to hold a first reactant (i.e. a solid chemical reactant mixture or an aqueous solution) one of the two reactants used to create a reaction which generates heat The first enclosed compartment 16 can be made of any suitable material able to withstand heat such as polyethylene-terephtalalate glygol, polystyrene, or aluminum.

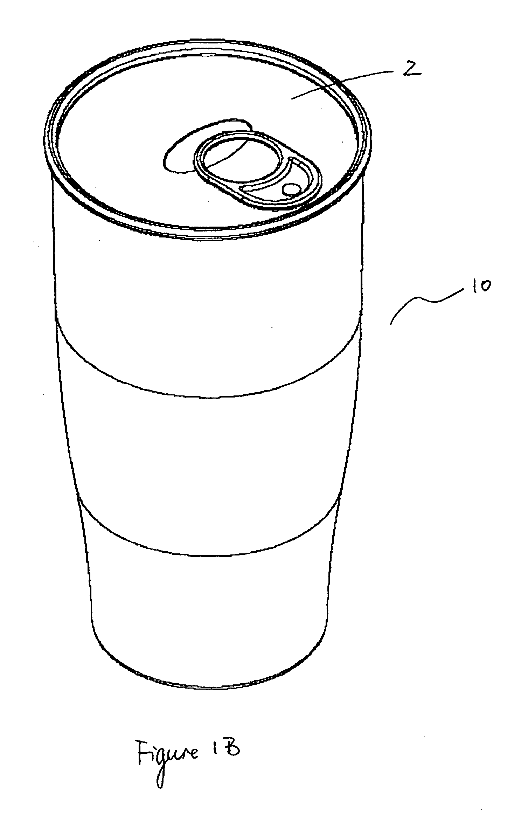

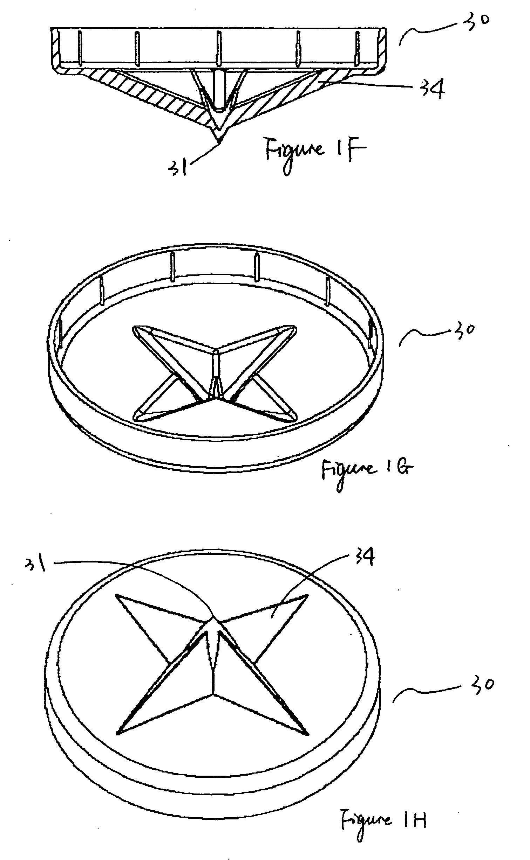

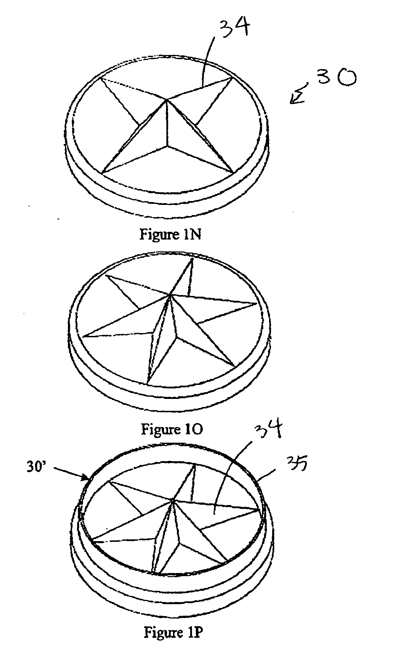

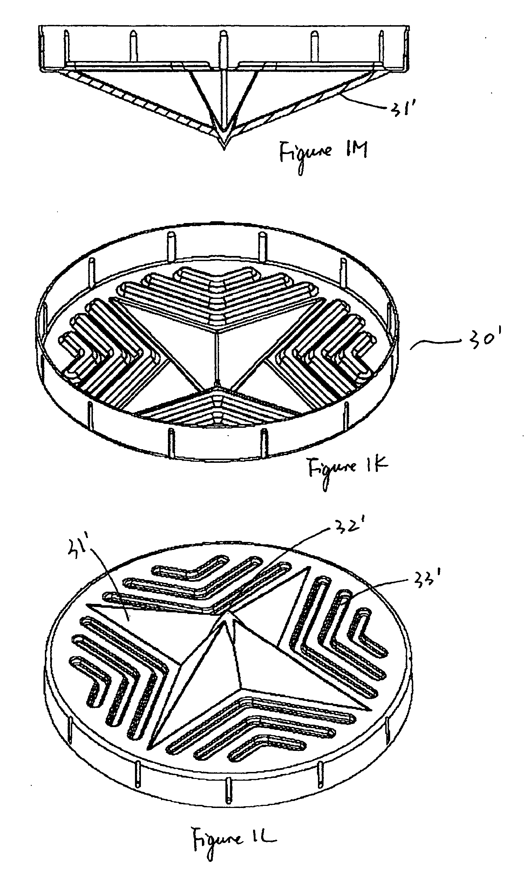

Referring to Figures 3A-3D, different dimensions of the first enclosed compartment 16 are shown, although the present invention is not limited to the illustrated dimensions, as will be easily appreciated by a person of ordinary skill in the art. In one embodiment, the first enclosed compartment 16 includes a flange 20 which extends circumferentially around the upper end of the first enclosed compartment 16. The flange 20 maintains the first enclosed compartment 16 snug within the outer container body 12 as shown in Figure 1 and also separates the reactant chamber into a lower compartment 24 containing the first enclosed compartment 16, and the second enclosed compartment 22. The second enclosed compartment 22 is designed to hold the second reactant (i.e. the aqueous solution or the solid chemical reactant mixture) which is to react with the first reactant provided in the first enclosed compartment 16. The flange 20 keeps all or most of the water from entering the lower compartment 24 before the self-heating step is initiated. In a preferred embodiment, the second enclosed compartment 22 has sufficient amount of the first reactant such that when the container is inverted upside down as discussed below, the first reactant covers annularly the outer surface of the inner container body 14 to maximize the surface area of the inner container body 14 contacting the mixture of the first reactant reacting with the second reactant. This configuration provides efficient transfer of the heat generated to the substance to be heated. Although the preferred embodiments of the present invention are described with the use of water and calcium chloride, other materials capable of generating an exothermic reaction can be used in accordance with the present invention. For example, water can react with calcium oxide or a blend of anhydrous magnesium chloride and calcium chloride.

Referring back to Figure 1A, the open, upper end of the first enclosed compartment 16 is covered with a breakable material which acts as a barrier to keep the second reactant from mixing with the first reactant before the self-heating reaction is activated. For example, the breakable partition 28 can be made of a foil such as an aluminum foil.

In one embodiment, the lower end of the first enclosed compartment 16 is sized and shaped to fit snuggly within the bottom 26 of the outer container body 12, such that when the bottom 26 is pushed towards the inner container body 14, the first enclosed compartment 16 is also moved towards the inner container body 14. The lower end of the first enclosed compartment 16 can be fastened to the inner surface of the bottom 26 to maintain the two in relative positions. The lower end of the first enclosed compartment 16 includes a radius of curvature which coincides with the radius of curvature provided in the bottom 26. This configuration allows the bottom 26 to propel upward easily when force is exerted against it and flex back to its original position.

Referring to Figures 1A, IF, 10, and IH, the container 10 further includes a breaking device 30 disposed on or around the outer surface of the lower end 31 of the inner container body 14. In one embodiment, the breaking device 30 is in the form of a puncture ring, which, as shown in detail in Figures 1F-H, includes one or more blades 34 arranged in a star configuration on an exterior surface of the puncture ring. In one embodiment, each blade has two triangular surfaces that are disposed at an angle relative to each other in a manner such that the intersection of the two surfaces form a cutting edge. Preferably, the cutting edge of each blade is disposed at an angle relative to the plane of the exterior surface of the puncture ring and converges to a sharp point 31, preferably located near the center of the puncture ring, and faces downward to the partition 28 and first enclosed compartment 16 underneath the partition 28. The sharp point 31 is proximate to the partition 28 such that when the bottom 26 is in the relaxed state, there is almost no contact but minimal distance between the sharp point 31 and the partition 28, or between the blades 34 of the puncture ring 30 and the partition 28, but when the bottom 26 is pushed toward the inner container body 14, the partition 28 would come in contact with the blades 34 of the puncture ring 30, and ultimately, will be broken by the sharp point 31 and blades 34. The configuration of the breaking device 30 substantially minimizes the initial contact area between the breaking device and the partition when the bottom is pushed toward the inner container body. As such, the pressure impact on the partition is maximized when the partition is first pierced, which in turn facilitates the partition breaking process. The breaking device 30 can be made of any suitable material including a metallic material such as aluminum or a polymeric material. As can be appreciated by a skilled artisan, the number of the blades 34 may vary, as illustrated in Figures IN, 10, and IP, from four to six or even more. In one embodiment, Figure IP shows that the breaking device 30 includes an outer surface ring 35 surrounding the blades 34, with the ring side being sharp. In operation, the outer surface ring 35, coupled with all the blades 34, makes it easier to cut open the partition 28.

Figures 1K, 1L, and 1M show another embodiment of the breaking device 30'. Similar to the above-described breaking device 30, this device 30' is in the form of a puncture ring, which includes, in addition to the blades 31' converging to a central sharp point 32', a plurality of apertures or openings 33' which will allow the first reactant (e.g., water or other liquid material) in the lower compartment to go through and quickly mix with the second reactant in the upper compartment.

Referring to Figure ID, in one embodiment, the container 10 includes a pull tab lid 2, which, as shown in Figure 1E in detail, covers the open surface of the inner container body 14 to keep inside the substance to be heated. The pull tab lid 2 can be made of any suitable material such as aluminum. In another embodiment, the container 10 includes a snap-on drinking lid 4, as shown in detail in Figures II-J. The drinking lid 4 includes an orifice to enable the consumer to consume the substance inside the container 10.

In one embodiment, the parts of the above-described container 10 are made of materials that can withstand at least the maximum temperature that would be reached from the exothermic reaction, which can be at least two hundred and fifty degrees Fahrenheit (250°F) (394.26 K).

In accordance with one embodiment of the present invention, when a user needs to heat the substance provided in the container 10, the user can invert the container 10 upside down as shown in Figure 2, and then exert pressure on the bottom 26 to push the bottom towards the inner container body 14. The exerted pressure will push the bottom 26, together with the first enclosed compartment 16, towards the breaking device 30. As a consequence, the blades 34 of the breaking device will cut open the partition 28, and the first reactant will be released into the second enclosed compartment 22 to mix with the second reactant. The user may shake the container 10 to facilitate mixture of the reactants, which creates an exothermic reaction to generate heat. Ultimately, the beverage or food substance provided inside the heating chamber 15 will be heated. After the substance is heated, the user may remove the pull tab lid 2, and as an option, put the drinking lid 4 back on the container 10, for consuming the heated substance.

Figure 4 provides a container 40 in accordance with, an alternative embodiment of the present invention. The container 40 includes an outer container body 42 defining a reactant chamber comprising a second enclosed chamber 43, an inner container body 44 defining a heating chamber 45 disposed within the outer container body 42, and a first enclosed compartment 46. The outer container body 42 includes a protruding, flexible bottom 48. The first enclosed compartment 46 is disposed inside the outer container body 42, underneath the inner container body 44 in a spaced relationship and a breaking device 50 in the form of a puncture ring is disposed between the inner container body 44 and the first enclosed compartment 46 covered by a breakable partition 57. The puncture ring 50 rests on a rib 52 provided radially along the inside surface of the outer container body 42. In assembly, the puncture ring 50 may be snap fit into this position or using any other conventional means. The puncture ring 50 separates the second enclosed chamber 43 and the first reactant chamber 46.

As shown in Figure 5, the puncture ring 50 has a wheel-like construction. The ring 50 has an outer rim 53, a hub 56, and multiple spokes 54 which extend radially from the hub 56 to the outer rim 53. Each spoke 54 has a blade-like edge 55. An aperture or opening is positioned between each pair of adjacent spokes 54. In operation, the opening or aperture allows the first reactant held within the first enclosed compartment 46 to pass through the breaking device 50 to mix with the second reactant residing within the second enclosed chamber 43. The inclusion of such apertures can enhance the mixture of reactants, especially when the first reactant an aqueous solution. The hub 56 has a pointed end, which, along with the blade-like edges 55 of the spokes 54, makes it easier to puncture open the breakable partition 57 when the breaking device 50 comes in contact with the partition 57. The puncture ring 50 extends the entire cross section of the second enclosed chamber 43 and the width of the outer rim 54 is substantially equal to or slightly greater than the distance between the outer container body 42 and the inner container body 44. The puncture ring 50 is positioned such that it either contacts the bottom of the inner container body 44 or is substantially proximate to the bottom of the inner container body 44. In this configuration, the second reactant is substantially kept within the second enclosed chamber 43.

Referring to Figure 6, the container 60 according to another embodiment of the present invention, includes an outer container body 62 defining a reactant chamber comprising a second enclosed chamber 63, an inner container body 64 heating chamber 65 disposed within the outer container body 62, and a first enclosed compartment 66 covered by a breakable partition 79. The first enclosed compartment 66 is disposed inside the outer container body 62, underneath the inner container body 64 in a spaced relationship. A breaking device 70 in the form of a puncture ring is secured to the bottom of the inner container body 64, between the inner container body 64 and the first enclosed compartment 66.

Referring to Figures 7A and 7B, the puncture ring 70 includes an outer rim 73, an inner rim 74, and a cutter 76. The puncture ring 70 includes multiple openings or apertures extending circumferentially between the outer rim 73 and the inner rim 74. The openings allow the first reactant held within the first enclosed compartment 66 to pass through the breaking device 70 to mix with the second reactant residing within the second enclosed chamber 63. The cutter 76 comprises multiple protruding blades 78 which extend from the inner rim 74 and converge into a sharp point 77. The sharp point 77, along with the multiple blades 78, can puncture the partition 79 when the breaking device 70 comes in contact with the partition 79. In one embodiment, the puncture ring 70 extends the entire cross section of the reactant chamber and the width of the outer rim 73 is substantially equal to or slightly greater than the distance between the outer container body 62 and the inner container body 64 and therefore keeps the second reactant within the second enclosed chamber 63.

Refening to Figure 8, the container 80 in accordance with another embodiment of the present invention includes an outer container body 82 defining a reactant chamber comprising a second enclosed chamber 83, an inner container body 84 defining a heating chamber 85 disposed within the outer container body 82, and a first enclosed compartment 86. The first enclosed compartment 86 contains a first reactant and includes a breakable partition 87 covering the lower end of the first enclosed compartment 86 to keep the first reactant within the first enclosed compartment 86. In one embodiment, the first enclosed compartment 86 is integrated with the inner container body 85 so that one integral part is formed using the conventional molding or other technologies. Alternatively, the inner container body 85 and the first enclosed compartment 86 can be made of two pieces that are sealed together. The container 80 further includes a breaking mechanism 90 at the bottom of the container 80. The breaking mechanism 90 includes a piston wiper 92 sealed to the inner wall of the outer container body 82. As is well-known in the art, the piston wiper 92 typically includes a pair of longitudinally extending pins 94. In operation, when the piston wiper 92 is pushed and turned as illustrated in Figure 9, the pair of pins 94 punctures and rips open the partition 87 so as to release the first reactant from the first enclosed compartment 86 into the second enclosed chamber 83 to mix with the second reactant.

Referring to Figure 10, the container 100 III accordance with another embodiment of the present invention includes an outer container body 102 defining a reactant chamber comprising a second enclosed chamber 103, an inner container body 104 defining a heating chamber 105 disposed within the outer container body 102, and a first enclosed compartment 106 covered by a breakable partition 109. The first enclosed compartment 106 is provided within the second enclosed chamber 103 below the inner container body 104 and mounted on a push and tum piston wiper 107. The container 100 further includes a serrated blade cutter 108 which is molded to the outer surface of the bottom of the inner container body 104. Alternatively, the serrated blade cutter 108 may be in the form of a puncture ring as shown in Figure IOA. In operation, the piston wiper 107 is pushed and turned as shown in Figure 11, and as a result, the first enclosed compartment 106 is pushed toward the inner container body 104 to make the partition 109 come in contact with the cutter 108 and be broken by the cutter 108.

As presented in Figures 12A-C, in one embodiment, the inner container body 120 and the breaking device 122 may be formed as one integral part, in which configuration, the breaking device is included in the bottom surface of the inner container body 120. Alternatively, the breaking device can be a separate part in contact with the inner container body in one of several ways as described above.

Referring to Figure 13A, in another embodiment, the inner container body 130 has a breaking device 132 formed into the bottom surface of the inner container body 130. The breaking device 132, as further shown in 13A-1, includes multiple blades 134 extending from a distal point 136 to a proximal point 138 near the center of the device 132. The distal point 136 extends vertically further than the proximal point 138 such that when the breaking device 132 contacts the partition, the distal point 136 contacts the outer perimeter of the partition before the proximal point 138 contacts near the center of the partition. This configuration allows the breaking device to break the partition in a more efficient manner, which requires less force exerted upon the partition. Figures 13A-2, 13A-3, and 13A-4 provide additional configurations of the breaking device, with various numbers, dimensions, or arrangements of the blades to be included into the breaking device.

Referring to Figures 13B and 13C, in another embodiment, a breaking device 131 is designed to be secured to the outer surface of the bottom of the inner container body. The breaking device 131 includes multiple blades 133 extending from a distal point 135 and converging to a proximal point 137 near the center of the device 131. The distal point 135 5 extends vertically further than the proximal point 137 such that when the breaking device 131 contacts the partition, the distal point 135 would contact the outer perimeter of the partition before the proximal point 137 comes into contact with the partition. In this configuration, the partition can be easily broken with less requirement of force to exert upon the partition.

Additional embodiments of a breaking device are shown in Figures 18A-D, 19, 20A-B, 21, 22A-C, and 23A-E. Referring to Figures 18A-18C, the breaking device contains various configurations and arrangements of blades in the breaking device. For example, in Figure 15A multiple blades extend from a distal point to a proximal point at the hub of the breaking device, and both the proximal point and the distal point extend vertically by the same distance. In Figure 15B, each of the blades can be of a different length. In Figure 15C, the breaking device includes, in addition a sharp proximal point near the center of the breaking device, a sharp distal point at the end of each blade. In Figure 15D, multiple blades extend from a distal point to a proximal point at the hub of the breaking device, where the proximal point extends vertically further than the distal point.

Referring to Figure 16, the breaking device 186 includes multiple diagonal blades 188 extending from a distal point 187 to a proximal point 189, and multiple inner blades that form a substantial square blade structure. The device 186 further includes a sharp hub point 191 in the center of the blade square.

Referring to Figures 20A-B, the breaking device include multiple blades extending from a distal point to a proximal point, where both the distal point and the proximal point extend the same distance vertically such that when the breaking device contacts the partition, both the distal point and proximal point come into contact with the partition simultaneously. Each blade can be arranged separately with even distance between adjacent blades, as shown in Figure 17A. Alternatively, in Figures 20B, each pair of adjacent blades can be such arranged that their proximal points overlap to form an angle of no more than 90 degrees.

Referring to Figure 18, in another embodiment, the breaking device 196 includes multiple blades 199 in a serrated structure arranged circumferentially around the outer edge of the device 196.

Referring to Figures 22A-C, the breaking device 220 in accordance with one embodiment of the present invention includes a number of cones 201 evenly arranged and secured in the bottom surface of the breaking device 220 such that all the cone points are facing toward the partition of the container. In one embodiment, the cones are evenly arranged on the bottom surface of the breaking device. In another embodiment, the cones 201 are arranged in a manner such that the distance between any two adjacent cones are substantially the same. In yet another embodiment, the cones 201 are arranged in a manner such that the distance between at least some of the adjacent cones are substantially the same. In yet another embodiment, the cones 201 are arranged symmetrically about an axis extending through the center of the breaking device 220. In operation, when a user exerts pressure on the bottom of the container, the cones 201 will come into contact with the partition, and pierce the partition open so as to make the reagents mix and react rapidly to generate heat. The use of cones in the breaking device can facilitate breaking the partition and maximize the mixture of reagents, especially when the second reagent in the first enclosed compartment is a liquid that can flow through the apertures of the partition caused by the cones. Another advantage of using cones to break the partition is the pencil-tip-shaped configuration of the cones can substantially minimize the interference with the transfer of the solid reagent from the first enclosed compartment to the second enclosed chamber. In other words, minimal solid chemical reactants will stay on the cones when it mixes and reacts with the aqueous solution so that the exothermic reaction between the reactants will proceed fully as intended without sacrificing loss in heat generated due to some solid chemical reactants left un-reacted. As may be understood by a skilled artisan, increasing the number of cones will enhance the efficiency of the breaking device. However, to include more cones in the breaking device will increase complexity in design as well as the tooling cost. In a preferred embodiment, the breaking device includes eight to ten cones.

Figures 23A-E provide another embodiment of the breaking device 230. As shown in Figures 23A-23C, the breaking device 230 comprises a number of cones 231 arranged and secured in the surface of one side of the breaking device, and a number of extensions 232 secured around the edge of the breaking device, with a space, such as a slot, between each pair of extensions 232. Preferably, the cones are evenly arranged in a manner such the cones are symmetrical about an axis extending through the center of the breaking device. In one embodiment, all of the extensions together form a rim extending in the opposite direction as the cone points. In one embodiment, each extension 232 is made of flexible material. In assembly, an extension 232 can be secured onto the edge of the breaking device using the conventional technologies such as molding in slots. As further illustrated in Figures 23D-E, the rim formed by the plurality of extensions 232 will fit snug against the inside wall of the outer container body 12, thereby separating the reactant chamber of the outer container body 12 into a second enclosed compartment 22 and a lower compartment 24 containing a first enclosed compartment 16. In one embodiment of the present invention, a solid chemical reactant mixture is placed above the breaking device and maintained within the upper compartment substantially by the extensions as long as each slot width is sufficiently small to keep the solid chemical reactants from passing through. When activated, the aqueous solution will be released from the first enclosed compartment and pass through the slots between extensions to mix and react with the solid chemical reactant within the second enclosed compartment. This configuration of the breaking device provides an advantage of keeping the generated heat close to the inner container body 14, thereby maximizing the heat exchange effect.

Referring to Figures 14A-F, in another embodiment, the breaking device 140 is inserted inside the first enclosed compartment 142 that is covered by the partition 145. The breaking device 140 includes a lower hub 143, multiple spokes 147 extending radically from the hub 143, and blades 144 extending substantially orthogonally from the spokes 147 towards the partition 145 and ending in an edge 141 within a sufficient distance to the partition for operating the heat-generating step. The lower hub 143 can be constructed with a flexible material and is positioned to retain substantial contact with the lower end 149 of the first enclosed compartment 142. Each blade 144 is of sufficient height that when pressure is exerted against the lower hub 143, the lower hub 143 flexes towards the partition 145, resulting in the blades 144 moving towards the partition 145 and the edges 141 and puncturing open the partition 145 to release the reactant within the first enclosed compartment 142.

In another embodiment, the container includes an outer container body defining a reactant chamber comprising a second enclosed chamber and an inner container body defining a heating chamber disposed within the outer container body. The container further includes an insulating layer provided along the inner surface of the outer container body (i.e. the inner surface of the reactant chamber) to enhance insulation of the container. The insulating layer can be made of any suitable insulating material such as styrofoam. The insulating layer can be in the form of a sleeve. The insulating layer can form the walls of the second enclosed chamber, which forms a part of the reactant chamber, to ensure that the heat generated from an exothermic reaction will be kept and directed to the inner container body and the outer surface of the container will not be getting too hot for a consumer to hold. The insulating layer can be used with any of the containers described in this application.

In one embodiment, the insulating layer is structurally molded resulting in a rigid foam, such as an expanded polystyrene foam, which is contoured to the inner shape of the outer container body. The insulating sleeve may be designed to drop into place within the outer container body and be secured by friction. In one embodiment, the insulating sleeve insulates the entire inner surface of the outer container body. In one embodiment, the inner surface of the insulating sleeve maybe textured to assist agitation and reaction of the first and second reactants. For example, the insulating sleeve may have a surface roughness of no less than 0.001 inches (0.0254 mm). In one embodiment, the insulating sleeve is resistant to high heat and compatible with the heating slurry formed by the mixture of the first and second reactants. In one embodiment, the insulating sleeve density can be adjusted to result in the highest insulating values required by the design and specification of the container.

In one embodiment of the invention, the insulating sleeve can be manufactured using a process called "Dry Heat Expansion". In this process, multiple spherical beads, each of which is of an approximate size of granular salt, are positioned in a mold to form the insulating sleeve. After heat is introduced to the mold, the granular beads expand to fill the mold cavity, with their density decreasing from 39 lb/cubic ft. (0.624 g/cm³)to 3 lbs/cubic ft. (0.048 g/cm³) or below, depending on the specific thickness limits set for the insulating sleeve.
The expanded beads may form a smooth insulating surface, or be further adjusted using any one of the conventional processes to generate certain roughness in the surface, such as an "orange peel" condition.

In one embodiment, the reactant chamber has a plurality of walls made of a material with a thermal conductivity selected to substantially inhibit heat generated from the exothermic reaction from transferring from the reactant chamber through the walls to the exterior of the chamber. Preferably, the material comprising the reactant chamber wall is in direct contact with the exothermic reaction product and has a non-smooth surface texture adapted to assist the release of molecules or bubbles when water vapor or steam is generated due to the exothermic reaction in the reactant chamber. In one embodiment, the material has a surface roughness of at least 0.001 inch (0.0254 mm).

In one embodiment, the containers described above are manufactured and assembled in the following process. The first enclosed compartment can be separately manufactured usmg any conventional manufacturing method such as thermoforming or injection molding. In one embodiment, the first enclosed compartment is filled with the solid chemical reactant mixture and covered with a foil sealed to the first enclosed compartment. Alternatively, the first enclosed compartment is filled with aqueous solution and covered with a waterproof material, such as foil, to be secured to the first enclosed compartment. The separation of the first enclosed compartment from the final container product provides flexibility to the manufacturer that can always check each individual sealed first enclosed compartment prior to assembling it into the rest of the container. The outer container body and the inner container body can be separately manufactured using conventional manufacturing methods such as injection molding. The breaking device can be made as one integral part of the inner container body. As an alternative, the breaking device can be separately made using injection molding or other methods and then secured to the inner container body. After each individual piece is manufactured, they can be assembled following the steps below. First, the outer container body is placed into a holder in a filling line. Subsequently, an adhesive is provided on the inner bottom of the outer container body where the first enclosed compartment will be secured. Then, the first enclosed compartment is placed inside the outer container body and secured to the bottom by means of the preapplied adhesive. One reactant is placed in the outer container body. The inner container body is placed into the outer container body in a manner such that the reactant placed in the outer container body will surround the inner container body, and the bottom of the inner container body is proximate to but has no direct contact with the first enclosed compartment. Beverage, food or other consumable products can be sealed inside the inner container body using a pull tab lid to be placed on top of the inner container body. The inner container and the pull tab lid are crimped to the outer container body making a seal using a conventional method. The underside of the pull tab lid can be coated with any FDA approved coating to protect the beverage or food products from contacting raw aluminum. A snap-on drinking lid is placed on top of the outer container. Other appropriate manufacturing and assembling methods well known to those skilled in the art may also be employed to manufacture and assemble the containers of the present invention.

In operation, a user may press the bottom of the outer container body toward the inner container body, and as a result of the force exerted upon the bottom, the first enclosed compartment will move with the bottom and be pushed toward the breaking device at the outer bottom of the inner container body so that the breaking device comes into contact with and breaks the partition, namely, cover of the first enclosed compartment.
Subsequently, the reactant within the first enclosed compartment will be released and mix with the other second reactant provided within the second enclosed compartment. The heat generated from the exothermic reaction between the two reactants will be transferred and exchanged to heat up the substance in the inner container body. When the substance is heated and ready to be consumed, the user can remove the pull tab lid and put the snap-on drinking lid back on the container. To maximize and facilitate the mixture of two reactants, the user can invert the container upside down before pressing the bottom of the outer container body, and optionally, shake the container after the partition of the reactant is broken to cause the mixture.

### II. Solid Chemical Reactant Mixtures

In another aspect, the present invention provides a solid chemical reactant mixture comprising an anhydrous magnesium chloride and/or dihydrate magnesium chloride, a calcium chloride, and a calcium oxide (e.g. anhydrous calcium chloride such as quicklime). The calcium chloride may be anhydrous calcium chloride, monohydrate calcium chloride, dihydrate calcium chloride, or a mixture thereof. In some embodiments, the calcium chloride is monohydrate calcium chloride, dihydrate calcium chloride, or a mixture thereof. In other embodiments, the calcium chloride is dihydrate calcium chloride.

As the term suggests, the solid chemical reactant mixtures of the present invention are in solid form, meaning that the chemical reactants within the mixture do not include liquid reactants. In some embodiments, the anhydrous magnesium chloride and/or dihydrate magnesium chloride, calcium chloride, and calcium oxide are thoroughly mixed together when added to the self-heating apparatus. In other embodiments, the anhydrous magnesium chloride and/or dihydrate magnesium chloride, calcium chloride, and calcium oxide are present as layers in the self-heating apparatus. Thus, in some embodiments, the anhydrous magnesium chloride and/or dihydrate magnesium chloride, calcium chloride, and calcium oxide are not actually mixed together when forming the solid chemical reactant mixture. The term "mixture," when used in the context of a solid chemical reactant mixture herein, means a substance composed of two or more components, each of which retain its own properties.

It has been discovered that this particular solid chemical reactant mixture provides surprising and advantageous properties for use within the heating apparatuses of the present invention. It is typically desirable to achieve a high instantaneous temperature in the heating apparatus and a high heat transfer rate through the container into the substance to be heated. Thus, upon dissolving this mixture in an aqueous solution, significant heat is produced quickly and is maintained effectively over the desired period. For example, where the heating apparatus is a self heating container comprising a heating chamber for containing a substance to be heated, the mixture produces, upon dissolving in an aqueous solution, sufficient heat energy to heat a desired amount of the substance and maintain the heat for a desired amount of time.

In some embodiments, the solid chemical reactant mixture consists essentially of an anhydrous magnesium chloride and/or dihydrate magnesium chloride, a calcium chloride, and a calcium oxide. In other embodiments, the solid chemical reactant mixture consists essentially of an anhydrous magnesium chloride and/or dihydrate magnesium chloride, a calcium chloride, a calcium oxide, and an organic acid. Where a mixture "consists essentially of particular chemical compounds, the term "consists essentially of means that the mixture includes only those particular chemical compounds plus other materials that do not materially effect the functionality of the solid chemical reactant mixture with the self-heating apparatuses of the present invention.

In some embodiments, the solid chemical reactant mixture consists of an anhydrous magnesium chloride and/or dihydrate magnesium chloride, a calcium chloride, and a calcium oxide. In other embodiments, the solid chemical reactant mixture consists of an anhydrous magnesium chloride and/or dihydrate magnesium chloride, a calcium chloride, a calcium oxide, and an organic acid. In other embodiments, the solid chemical reactant mixture consists of an anhydrous magnesium chloride, a calcium chloride, a calcium oxide, and an organic acid.

In some embodiments, the mixture employs anhydrous magnesium chloride and not dihydrate magnesium chloride. As described above, the calcium chloride may be anhydrous calcium chloride, monohydrate calcium chloride, dihydrate calcium chloride, or a mixture thereof. In some embodiments, the calcium chloride is a mixture of monohydrate calcium chloride, and dihydrate calcium chloride. The calcium oxide (also known as quicklime) may be present in the mixture in any appropriate solid form.

The organic acid is an acid containing carbon atoms. The organic acid is typically a weak acid containing a carboxyl (-COOH) group, such as citric acid, acetic acid, or lactic acid.

The proportions of anhydrous magnesium chloride and/or dihydrate magnesium chloride, calcium chloride, and/or calcium oxide are from 10 to 55 parts, from 10 to 35 parts, and from 10 to 20 parts, respectively. In some embodiments, the total combined mass of magnesium chloride and/or dihydrate magnesium chloride, calcium chloride, and calcium oxide is less than 100 g.

In some embodiments, the mixture forms part of an aqueous solution. The proportions of anhydrous magnesium chloride and/or dihydrate magnesium chloride, calcium chloride, and/or calcium oxide may be adjusted according to the teachings herein to heat the aqueous solution sufficiently to produce steam.

### III. Methods of Heating a Substance in a Chamber

In another aspect, the present invention provides a method of heating a substance in a chamber (e.g. the heating chamber). The method includes contacting an aqueous solution with a solid chemical reactant mixture to form a heating solution (e.g. solubilizing the solid chemical reactant mixture with the aqueous solution). As described above, the heating solution is in fluid contact with the chamber (i.e. the solution makes contact with the outer walls of the chamber). The solid chemical reactant mixture includes a first chemical reactant, a second chemical reactant, and a third chemical reactant. The first chemical reactant is allowed to sufficiently exothermically react with the aqueous solution to heat the heating solution to within an elevated temperature range. The second chemical reactant is then allowed to sufficiently exothermically react with the aqueous solution to maintain the elevated temperature range. The third chemical reactant is then allowed tosufficiently exothermically react with the aqueous solution to maintain the temperature range thereby heating the substance. Typically, the third chemical reactant is allowed to sufficiently exothermically react with the aqueous solution to maintain the temperature range over a longer period of time thereby maintaining heat transfer and continuing to heat the substance.

In some embodiments, the method further includes adjusting the elevated temperature range based on the heat capacity of the substance. Appropriate substances (e.g. comestible liquids and solids), elevated temperature ranges (e.g. form 200°F (366.48 K) to 250°F (394.26 K)), and various other aspects of the method are described above (e.g. various self-heating apparatus embodiments, appropriate chemical solid chemical reactant mixtures, and other aspects of the embodiments described above).

In another aspect, the present invention provides a method of heating a substance in a chamber (e.g. a heating chamber). The method includes contacting an aqueous solution with a solid chemical reactant mixture. The aqueous solution is allowed to dissolve the solid chemical reactant mixture thereby producing within two minutes a heating solution having a temperature of at least 200°F (366.48 K). The heating solution is in fluid contact with the chamber. Finally, the heating solution is allowed to transfer heat to the chamber while maintaining a temperature of at least 200°F (366.48 K) for at least one minute within the heating solution thereby heating the substance. In some embodiments, the temperatures the heating solution in the dissolving step and the heat transfer step are independently from 200°F (366.48 K) to 250°F (394.26 K).

In another aspect, the present invention provides a method of heating at least six ounces of a liquid to a temperature of at least 120°F (322.04 K) in a chamber (e.g. a heating chamber). The method includes contacting an aqueous solution with a solid chemical reactant mixture. The solid chemical reactant mixture has a mass of less than 100 g. The aqueous solution is allowed to dissolve the solid chemical reactant mixture thereby producing a heating solution. The heating solution is allowed to transfer heat to the chamber thereby heating the liquid to at least 120°F (322.04 K) in the chamber.

In some embodiments, the liquid is heated to at least 120°F (322.04 K) within five, or more preferable four, three or two minutes of contacting the aqueous solution with the solid chemical reactant mixture. The liquid may be heated to a temperature of from 130°F (327.59 K) to 150°F (338.71 K). The solid chemical reactant mixture may a mass of less than 150 g, or morepreferably less than 100 g, or less than 75 g. In some embodiments, the aqueous solution has a volume of less than 100 mL. The solid chemical reactant mixture may include magnesium chloride, calcium chloride, and calcium oxide. The magnesium chloride may be anhydrous magnesium chloride, dihydrate magnesium chloride, or a mixture thereof.

In some embodiments, the substance is heated using an embodiment of the self-heating apparatuses described above. Thus, in some embodiments, the chamber is a heating chamber, the solid chemical reactant mixture is within a first enclosed compartment and the aqueous solution is within a second enclosed compartment. The various embodiments of the self-heating apparatuses and solid chemical reactants described above are equally applicable to the methods of heating a substance describe herein.

In some embodiments of the methods and apparatuses described herein, the aqueous solution is heated sufficiently to form steam. The steam condensation on the outer walls of the chamber then provides heat to the chamber for heating a substance therein. In some embodiments, the even distribution of steam (e.g. within the reactant chamber) provides for substantially uniform heat around the chamber (e.g. heating chamber).

Other embodiments and uses of the invention will be apparent to those skilled in the art from consideration of the specification and practice of the invention disclosed herein. Although the invention has been particularly shown and described with reference to several preferred embodiments thereof, it will be understood by those skilled in the art that various changes in the form and details may be made therein without departing from the spirit and scope of the invention.

### IV. Examples

The following examples are meant to illustrate certain embodiments of the invention, and are note intended to limit the scope of the invention.

### Examples 1-4

700 grams of calcium chloride dihydrate, 200 grams of magnesium chloride anhydrous and 200 grams of calcium oxide is mixed together in a beaker with a spatula until the powders are thoroughly mixed. Thus, the solid chemical reactant mixture consisted essentially of about 3.5 parts calcium chloride, about 1 part magnesium chloride, and about 1 part calcium oxide by weight. In a separate container a 5% solution oflactic acidin distilled water is mixed. Sixty-three grams of the 5% lactic acid was placed in a bottom enclosed compartment of a heat cup (i.e. self- heating apparatus) and 35 grams of the powder mix was loaded into an upper enclosed compartment. The drinking cup (*i.e*., heating chamber) was filled with water. The cup was activated by pushing a button on the bottom thereby breaking the breakable partition between the bottom and upper enclosed compartments, then shaking for 30 seconds, and then letting sit. After a total of two minutes the drinking liquid was 105 °F (313.71 K). The exact same experiment was repeated with the exception of using 45 grams of the powder and the drinking liquid in the heating compartment reached 116.2 °F (319.93 K). Again, the experiment was repeated with 55 grams of powder and the temperature reached .131.8 °F (328.6 K), and when 65 grams of powder was used the drinking liquid reached 149.3 °F (338.32 K).

### Example 5-7

In a small beaker 35 grams of calcium chloride was mixed with 10 grams of magnesium chloride and 10 grams of calcium oxide in a first enclosed compartment. Thus, the solid chemical reactant mixture consisted essentially of about 3.5 parts calcium chloride, about I part magnesium chloride, and about 1 part calcium oxide by weight. The liquid cup contained 65 grams of 10% lactic acid solution in a second enclosed compartment when the cup was activated by breaking a breakable partition, whereupon the temperature reached 144.5 °F (335.65 K). Two more drinking cups (i.e. self-heating apparatuses) with the exact same contents were constructed and one cup reached 141.2 F (333.87 K) and the other was 146.3 °F (336.65 K). The heating chambers of the drinking cups in these three examples were filled with water as the medium to be heated. Examples 8-10

In the next set of examples the bottom enclosed compartments contained a solution that was 15% lactic acid and 0.5% sodium lauryl sulfate in distilled water. The bottom enclosed compartments were filled with 65 grams of this solution. In the first example the heating chamber of the drinking cup was filled with tea, and an upper enclosed compartment contained a dry powder composed of 35 grams of calcium chloride, 10 grams of calcium oxide and 10 grams of magnesium chloride. Thus, the solid chemical reactant mixture consisted essentially of about 3.5 parts calcium chloride, about 1 part magnesiumchloride, and about 1 part calcium oxide by weight. When activated by breaking a breakable partition between the upper and bottom enclosed compartments, the temperature was 137.8°F (331.93 K). Another cup was made the exact same way but contained water in the heating chamber of the drinking cup and the temperature reached 143.4 °F (335.04 K). A third cup was prepared with the same lactic acid-sodium lauryl sulfate solution in the bottom enclosed compartment, and the powder contained 38.5 grams of calcium chloride, 11 grams of magnesium chloride and 11 grams of calcium oxide. Thus, the solid chemical reactant mixture consisted essentially of about 3.5 parts calcium chloride, about 1 part magnesium chloride, and about 1 part calcium oxide by weight. The heating chamber of the drinking cup contained apple cider and the temperature of the cider when activated was 147.4 °F (337.26 K).

### Example 11

Ten cups were prepared exactly the same way as in above Examples 8-10.
The bottom enclosed compartment contained 65 grams of a 15% solution of lactic acid and a 0.5% solution of sodium lauryl sulfate. The powder in the upper enclosed compartment was 35 grams of calcium chloride, 10 grams of magnesium chloride, 10 grams calcium oxide. Thus, the solid chemical reactant mixture consisted essentially of about 3.5 parts calcium chloride, about 1 part magnesium chloride, and about 1 part calcium oxide by weight. Five of the drinking cups were filled with apple juice in the heating chamber and the temperature upon activation ranged from 124.4 °F (324.48 K) to 150.2 °F (338.82 K). The other five cups were filled with tea in the heating chamber and upon activation (i.e. breaking a breakable partition between the upper and bottom enclosed compartments) the temperature ranged from 125.0 °F (324.82 K) to 153.1 °F (340.43 K).

### Examples 12-13

Two cups were prepared as in example 11. The heating chamber drinking cup contained tea. After the samples were prepared they were placed in the freezer for 24 hours before activation. They were removed from the freezer and activated immediately by breaking the breakable partition. The tea of one reached 125.0 °F (324.82 K) and the other 122.1 °F (323.21 K).

### Examples 14-15

Two cups were prepared as in example 11 and also contained tea in the heating chamber of the drinking cup. After the samples were prepared they were placed in the refrigerator for 24 hours before they were activated. Upon activation by breaking the breakable partition, the tea in one reached 138.2 °F (332.15 K) and the other was 142.7 °F (334.65 K).

### Examples 16-17

Again two cups were prepared as in example 11 and also contained tea in the heating chamber of the drinking cup. After the samples were prepared they were placed on a shaking table for 24 hours to simulate shipping conditions. Upon activation by breaking the breakable partition, the tea in one cup reached 153 °F (340.37K) and the other was 160 °F (344.36 K).

### Examples 18-21

In these four examples the powder was 35 grams of calcium chloride, 10 grams of magnesium chloride, and 10 grams of calcium oxide. Thus, the solid chemical reactant mixture consisted essentially of about 3.5 parts calcium chloride, about 1 part magnesium chloride, and about 1 part calcium oxide by weight. The heating chamber of the drinking cup contained tea in all four examples. In the bottom enclosed compartment the lactic acid was replaced with 15% acetic acid in one case, 15% oxalic acid in one case, 15% gluconic acid in another case and 15% propionic acid in the last case. They all contained 0.5% sodium lauryl sulfate. Upon activation by breaking the breakable partition, the tea in the acetic acid cup reached 122.0 °F (323.15 K), the oxalic cup 132.6 °F (329.04 K), the gluconic acid cup 126.0 °F (325.37 K) and the propionic cup reached 130.5 °F (327.87 K).

### Examples 22-25.

In these two examples technical grade calcium oxide instead of reagent grade calcium oxide was used. The heating chamber of the drinking cup contained tea and the temperatures of the tea in the heating chamber reached in 143.6 °F (335.15 K) and 143.4 °F (335.04 K). From this experiment it was determined that the calcium oxide could be purchased using a lower grade rather than reagent grade calcium oxide. In another test the heating compartment was filled with juice instead of tea and the temperature reached 141.4 °F (333.93 K) and 139.0 °F (332.59 K).

### Examples 26-31

In the following examples the dry powders were not mixed. They were layered in the enclosed chambers to determine whether mixing the chemicals affects performance. The dry powders in this experiment were 38.5 grams of calcium chloride, 11 grams of magnesium chloride and 11 grams of calcium oxide. Thus, the solid chemicalreactant mixture consisted essentially of about 3.5 parts calcium chloride, about 1 part magnesium chloride, and about 1 part calcium oxide by weight. The bottom enclosed compartment contained the 15% lactic acid and 0.5% sodium lauryl sulfate solution and the heating chamber of the drinking cup contained water. See Table 1 for the results.

**Table 1**

| Cup Number | First Layer | Second Layer | Third Layer | H2O Temp. |
|---|---|---|---|---|
| 1 | Calcium Oxide | Calcium Chloride | Magnesium Chloride | 141.5 F (333.98 K) |
| 2 | Calcium Chloride | Magnesium Chloride | Calcium Oxide | 148.0 F (337.59 K) |
| 3 | Magnesium Chloride | Calcium Oxide | Calcium Chloride | 129.0 F (327.04 K) |
| 4 | Magnesium Chloride | Calcium Chloride | Calcium Oxide | 131.5 F (328.43 K) |
| 5 | Calcium Chloride | Calcium Oxide | Magnesium Chloride | 143.0 F (334.82 K) |
| 6 | Calcium Oxide | Magnesium Chloride | Calcium Chloride | 133.5 F (329.54 K) |

### Example 31-34

In these examples the dry chemicals were ground in a mill and then placed in the oven to make sure they were dry. The dry mix contained 38.5 grams of calcium chloride, 11 grams of magnesium chloride, and 11 grams of calcium oxide. Thus, the solid chemical reactant mixture consisted essentially of about 3.5 parts calcium chloride, about 1 part magnesium chloride, and about 1 part calcium oxide by weight. In the first cup the heating chamber of the drinking cup contained water and upon activation by breaking a breakable partition the temperature of the water was 145.0 °F (335.93 K). In the second cup the heating chamber of the drinking cup contained juice and the temperature was 139.6 °F (332.93 K). The other two cups contained tea and one reached a 143.2 °F (334.93 K) and the other was 136.6 °F (331.62 K).

### Example 35-45

In the next eleven examples the dry chemicals were all ground in a grinder and dried in the oven. The mix contained 38.5 grams of calcium chloride, 13.0 grams of magnesium chloride and 11.0 grams calcium oxide. Thus, the solid chemical reactant mixture consisted essentially of about 3.5 parts calcium chloride, about 1.2 parts magnesiumchloride, and about 1 part calcium oxide by weight. The bottom enclosed containers contained the 15% lactic acid with 0.5% sodium lauryl sulfate solution. Six cups contained tea and upon activation by breaking a breakable partition the temperature of the water in the heating chamber ranged from 126.7 °F (325.76 K) to 139.1 °F (332.65 K). In the other five cups the temperatures ranged from 136.8 °F (331.37 K) to 143.6 °F (335.15 K).

### Example 46-47

In these examples the bottom enclosed container contained 20% lactic acid and 0.5% sodium lauryl sulfate solution and the heating chamber of the drinking cup contained water but the dry chemicals only contained 30 grams of calcium chloride and 28 grams of calcium oxide. Thus, the solid chemical reactant mixture consisted essentially of about 1.1 parts calcium chloride and about 1 part calcium oxide by weight. The temperature upon activation was 141.0 °F (333.17 K). A second cup contained 25 grams of calcium chloride and 25 grams of calcium oxide and the water temperature upon activation was 135 °F (330.37 K). Thus, the solid chemical reactant mixture consisted essentially of about 1 part calcium chloride and about 1 part calcium oxide by weight.

### Examples 48-49

In these examples the bottom enclosed container contained 20% lactic acid and 0.5% sodium lauryl sulfate solution and the heating chamber of the drinking cup contained water and the dry chemicals mix contained 35 grams of calcium chloride and 18 grams of calcium oxide and 2 grams of magnesium chloride. Thus, the solid chemical reactant mixture consisted essentially of about 17.5 parts calcium chloride, about 9 parts calcium oxide, and about 1 part magnesium chloride by weight. The temperature of the water upon activation was 140.5 °F (333.43 K) and 138.0 °F (332.04 K).

### Example 50-59

In these nine examples the bottom enclosed container contained the 15% lactic acid solution with the 0.5% sodium lauryl sulfate and the dry powder was ground and placed in the oven. The dry mix contained 35 grams of calcium chloride, 15 grams of magnesium chloride and 15 grams of calcium oxide. Thus, the solid chemical reactant mixture consisted essentially of about 2.3 parts calcium chloride, about 1 part magnesium chloride, and about 1 part calcium oxide by weight. All the heating chambers of the drinkingcups contained water and the temperature ranged between 130.6 °F (327.93 K) and 144.0 °F (335.32 K) in all nine cups upon activation.

## Claims

1. A heating apparatus for heating a comestible substance, comprising:
a heating chamber (15, 45, 65, 85, 105) holding a comestible substance;
a reactant chamber (13, 46) adjacent to the heating chamber (15, 45, 65, 85, 105) comprising a first compartment (16, 46, 66, 86, 106) and a second compartment (22); one of the first (16, 46, 66, 86, 106) and second compartments (22) containing an aqueous solution and the other of the first (16) and second compartments (22) containing a solid chemical reactant mixture, wherein the solid chemical reactant mixture consists essentially of calcium oxide ;
a breakable partition (28, 57, 79, 87, 109, 145) between the first compartment (16, 46, 66, 86, 106) and the second compartment (22);
wherein upon breaking the breakable partition (28, 57, 79, 87, 109, 145), the aqueous solution and the solid chemical reactant mixture contact and the aqueous solution dissolves the solid chemical reactant mixture thereby producing a heating solution capable of heating the comestible substance to at least 120°F (322.04 K);
**characterized in that** the heating chamber (15, 45, 65, 85, 105) holding at least six ounces (170.46 ml) of the comestible substance; and further wherein the solid chemical reactant mixture consists essentially of calcium oxide, calcium chloride, and magnesium chloride.

2. The apparatus of Claim 1, wherein the comestible substance is heated to at least 120°F (322.04 K) within two minutes of contacting the aqueous solution with the solid chemical reactant mixture.

3. The apparatus of Claim 1, wherein upon breaking the breakable partition (28, 57, 79, 87, 109, 145), the aqueous solution dissolves the solid chemical reactant mixture thereby producing a heating solution capable of heating at least six ounces of the comestible substance to a temperature from 130°F (327.59 K) to 150°F (338.71 K).

4. The apparatus of Claim 1, further comprising an insulating layer on the inner surface of the reactant chamber (13, 46).

5. The apparatus of Claim 1, wherein the solid chemical reactant mixture has a mass of less than 100 g.

6. The apparatus of Claim 5, wherein the aqueous solution has a volume of less than 100 mL.

7. The apparatus of Claim 1, wherein the solid chemical reactant mixture consists essentially of 10 to 55 parts of anhydrous magnesium chloride, 10 to 35 parts of calcium chloride, and 10 to 20 parts of calcium oxide.

8. The apparatus of Claim 1, wherein the magnesium chloride is anhydrous magnesium chloride, dihydrate magnesium chloride, or a mixture thereof

9. The apparatus of Claim 5, wherein upon contacting the aqueous solution with the solid chemical reactant mixture, the aqueous solution dissolves the solid chemical reactant mixture thereby producing within two minutes a heating solution having a temperature of at least 200°F (366.48 K), and maintaining a temperature of at least 200°F (366.48 K) for at least one minute.

10. The apparatus of Claim 5, wherein upon breaking the breakable partition (28, 57, 79, 87, 109, 145), the aqueous solution dissolves the solid chemical reactant mixture thereby producing within two minutes a heating solution having a temperature from 200°F (366.48 K) to 250°F (394.26 K), and maintaining a temperature from 200°F (366.48 K) to 250°F (394.26 K) for at least one minute.

11. The apparatus of Claim 1, wherein the substance is a liquid.

12. The apparatus of Claim 1, wherein the solid chemical reactant mixture consists essentially of 3.5 parts calcium chloride, part magnesium chloride, and 1 part calcium oxide by weight.

13. The apparatus of Claim 1, wherein the solid chemical reactant mixture consists essentially of 2.3 parts calcium chloride, part magnesium chloride, and 1 part magnesium chloride by weight.

14. The apparatus of Claim 1, wherein the solid chemical reactant mixture consists essentially of 17.5 parts calcium chloride, 9 parts calcium oxide, and 1 part magnesium chloride by weight.

15. An apparatus according to any of Claims 12, 13, or 14, wherein the solid chemical reactant mixture has a mass of less than 100 grams.

## Patentansprüche

1. Heizvorrichtung zum Erwärmen einer Nahrungsmittelsubstanz, wobei die Heizvorrichtung umfasst:
eine Heizkammer (15, 45, 65, 85, 105), die eine Nahrungsmittelsubstanz hält;
eine an die Heizkammer (15, 45, 65, 85, 105) angrenzende Reaktantenkammer (13, 46), die ein erstes Fach (16, 46, 66, 86, 106) und ein zweites Fach (22) umfasst; wobei das erste Fach (16, 46, 66, 86, 106) oder das zweite Fach (22) eine wässrige Lösung enthält und das andere des ersten Fachs (16) und des zweiten Fachs (22) ein festes Chemikalienreaktantengemisch enthält, wobei das feste Chemikalienreaktantengemisch im Wesentlichen aus Calciumoxid besteht;
eine zerbrechliche Trennwand (28, 57, 79, 87, 109, 145) zwischen dem ersten Fach (16, 46, 66, 86, 106) und dem zweiten Fach (22);
wobei sich die wässrige Lösung und das feste Chemikalienreaktantengemisch beim Zerbrechen der zerbrechlichen Trennwand (28, 57, 79, 87, 109, 145) berühren und die wässrige Lösung das feste Chemikalienreaktantengemisch auflöst und dadurch eine Erwärmungslösung erzeugt, die die Nahrungsmittelsubstanz wenigstens auf 120°F (322,04 K) erwärmen kann;
**dadurch gekennzeichnet, dass** die Heizkammer (15, 45, 65, 85, 105) wenigstens sechs Unzen (170,46 ml) der Nahrungsmittelsubstanz hält; und wobei ferner das feste Chemikalienreaktantengemisch im Wesentlichen aus Calciumoxid, Calciumchlorid und Magnesiumchlorid besteht.

2. Vorrichtung gemäß Anspruch 1, bei der die Nahrungsmittelsubstanz innerhalb von zwei Minuten nach Berührung der wässrigen Lösung mit dem festen Chemikalienreaktantengemisch auf wenigstens 120 °F (322, 04 K) erwärmt wird.

3. Vorrichtung gemäß Anspruch 1, bei der die wässrige Lösung das feste Chemikalienreaktantengemisch beim Zerbrechen der zerbrechlichen Trennwand (28, 57, 79, 87, 109, 145) auflöst und dadurch eine Heizlösung erzeugt, die wenigstens sechs Unzen der Nahrungsmittelsubstanz auf eine Temperatur von 130 °F (327,59 K) bis 150 °F (338,71 K) erwärmen kann.

4. Vorrichtung gemäß Anspruch 1, die ferner eine Isolierschicht auf der Innenoberfläche der Reaktantenkammer (13, 46) umfasst.

5. Vorrichtung gemäß Anspruch 1, bei der das feste Chemikalienreaktantengemisch eine Masse von weniger als 100 g aufweist.

6. Vorrichtung gemäß Anspruch 5, bei der die wässrige Lösung ein Volumen von weniger als 100 ml aufweist.

7. Vorrichtung gemäß Anspruch 1, bei der das feste Chemikalienreaktantengemisch im Wesentlichen aus 10 bis 55 Teilen wasserfreiem Magnesiumchlorid, aus 10 bis 35 Teilen Calciumchlorid und aus 10 bis 20 Teilen Calciumoxid besteht.

8. Vorrichtung gemäß Anspruch 1, bei der das Magnesiumchlorid wasserfreies Magnesiumchlorid, Dihydratmagnesiumchlorid oder ein Gemisch davon ist.

9. Vorrichtung gemäß Anspruch 5, bei der die wässrige Lösung beim Berühren der wässrigen Lösung mit dem festen Chemikalienreaktantengemisch das feste Chemikalienreaktantengemisch auflöst und dadurch innerhalb von zwei Minuten eine Heizlösung mit einer Temperatur von wenigstens 200 °F (366,48 K) erzeugt und wenigstens eine Minute eine Temperatur von wenigstens 200 °F (366,48 K) aufrechterhält.

10. Vorrichtung gemäß Anspruch 5, bei der die wässrige Lösung beim Zerbrechen der zerbrechlichen Trennwand (28, 57, 79, 87, 109, 145) das feste Chemikalienreaktantengemisch auflöst und dadurch innerhalb von zwei Minuten eine Heizlösung mit einer Temperatur von 200 °F (366,48 K) bis 250 °F (394,26 K) erzeugt und wenigstens eine Minute eine Temperatur von 200 °F (366,48 K) bis 250 °F (394,26 K) aufrechterhält.

11. Vorrichtung gemäß Anspruch 1, bei der die Substanz eine Flüssigkeit ist.

12. Vorrichtung gemäß Anspruch 1, bei der das feste Chemikalienreaktantengemisch im Wesentlichen aus 3,5 Gewichtsteilen Calciumchlorid, aus 1 Gewichtsteil Magnesiumchlorid und aus 1 Gewichtsteil Calciumoxid besteht.

13. Vorrichtung gemäß Anspruch 1, bei der das feste Chemikalienreaktantengemisch im Wesentlichen aus 2,3 Gewichtsteilen Calciumchlorid, aus 1 Gewichtsteil Magnesiumchlorid und aus 1 Gewichtsteil Calciumoxid besteht.

14. Vorrichtung gemäß Anspruch 1, bei der das feste Chemikalienreaktantengemisch im Wesentlichen aus 17,5 Gewichtsteilen Calciumchlorid, aus 9 Gewichtsteilen Calciumoxid und aus 1 Gewichtsteil Magnesiumchlorid besteht.

15. Vorrichtung gemäß einem der Ansprüche 12, 13 oder 14, bei der das feste Chemikalienreaktantengemisch eine Masse von weniger als 100 Gramm aufweist

## Revendications

1. Appareil chauffant permettant de chauffer une substance comestible, comprenant :
une chambre chauffante (15, 45, 65, 85, 105) contenant une substance comestible ;
une chambre de réactif (13, 46) adjacente à la chambre chauffante (15, 45, 65, 85, 105) comprenant un premier compartiment (16, 46, 66, 86, 106) et un second compartiment (22) ; l'un des premier (16, 46, 66, 86, 106) et second compartiments (22) contenant une solution aqueuse et l'autre des premier (16) et second compartiments (22) contenant un mélange de réactif chimique solide, dans lequel le mélange de réactif chimique solide consiste essentiellement en l'oxyde de calcium ;
une cloison cassable (28, 57, 79, 87, 109, 145) entre le premier compartiment (16, 46, 66, 86, 106) et le second compartiment (22) ;
dans lequel lors de la rupture de la cloison cassable (28, 57, 79, 87, 109, 145), la solution aqueuse et le mélange de réactif chimique solide entrent en contact et la solution aqueuse dissout le mélange de réactif chimique solide produisant ainsi une solution chauffante pouvant chauffer la substance comestible à au moins 120 °F (322,04 K) ;
**caractérisé en ce que** la chambre chauffante (15, 45, 65, 85, 105) contient au moins six onces (170,46 ml) de la substance comestible ; et en outre dans lequel le mélange de réactif chimique solide consiste essentiellement en l'oxyde de calcium, le chlorure de calcium, et le chlorure de magnésium.

2. Appareil selon la revendication 1, dans lequel la substance comestible est chauffée à au moins 120 °F (322,04 K) en deux minutes de mise en contact de la solution aqueuse avec le mélange de réactif chimique solide.

3. Appareil selon la revendication 1, dans lequel lors de la rupture de la cloison cassable (28, 57, 79, 87, 109, 145), la solution aqueuse dissout le mélange de réactif chimique solide, produisant ainsi une solution chauffante pouvant chauffer au moins six onces de la substance comestible à une température de 130 °F (327,59 K) à 150 °F (338,71 K).

4. Appareil selon la revendication 1, comprenant en outre une couche isolante sur la surface interne de la chambre de réactif (13, 46).

5. Appareil selon la revendication 1, dans lequel le mélange de réactif chimique solide a une masse inférieure à 100 g.

6. Appareil selon la revendication 5, dans lequel la solution aqueuse a un volume de moins de 100 mL.

7. Appareil selon la revendication 1, dans lequel le mélange de réactif chimique solide consiste essentiellement en 10 à 55 parties de chlorure de magnésium anhydre, 10 à 35 parties de chlorure de calcium et 10 à 20 parties d'oxyde de calcium.

8. Appareil selon la revendication 1, dans lequel le chlorure de magnésium est du chlorure de magnésium anhydre, du chlorure de magnésium dihydrate ou leur mélange.

9. Appareil selon la revendication 5, dans lequel lors de la mise en contact de la solution aqueuse avec le mélange de réactif chimique solide, la solution aqueuse dissout le mélange de réactif chimique solide produisant ainsi en deux minutes une solution chauffante ayant une température d'au moins 220 °F (366,48 K), et maintenant une température d'au moins 200 °F (366,48 K) pendant au moins une minute.

10. Appareil selon la revendication 5, dans lequel lors de la rupture de la cloison cassable (28, 57, 79, 87, 109, 145), la solution aqueuse dissout le mélange de réactif chimique solide, produisant ainsi en deux minutes une solution chauffante ayant une température de 200 °F (366,48 K) à 250 °F (394,26 K), et maintenant une température de 200 °F (366,48 K) à 250 °F (394,26 K) pendant au moins une minute.

11. Appareil selon la revendication 1, dans lequel la substance est un liquide.

12. Appareil selon la revendication 1, dans lequel le mélange de réactif chimique solide consiste principalement en 3,5 parties de chlorure de calcium, 1 partie de chlorure de magnésium, et 1 partie d'oxyde de calcium en poids.

13. Appareil selon la revendication 1, dans lequel le mélange de réactif chimique solide consiste essentiellement en 2,3 parties de chlorure de calcium, 1 partie de chlorure de magnésium, et 1 partie d'oxyde de calcium en poids.

14. Appareil selon la revendication 1, dans lequel le mélange de réactif chimique solide consiste essentiellement en 17,5 parties de chlorure de calcium, 9 parties d'oxyde de calcium, et 1 partie de chlorure de magnésium en poids.

15. Appareil selon l'une quelconque des revendications 12, 13 ou 14, dans lequel le mélange de réactif chimique solide a une masse de moins de 100 grammes.
